# EUROPEAN PATENT SPECIFICATION

(11) **EP 3 812 881 B1**
(45) Date of publication and mention of the grant of the patent: **03.04.2024**
(21) Application number: 20202717.3
(22) Date of filing: 20.10.2020
(51) Int. Cl.: G06F 3/12, H04W 4/80, H04W 4/20

(54) **INFORMATION PROCESSING DEVICE, MOBILE TERMINAL, AND INFORMATION PROCESSING METHOD**
INFORMATIONSVERARBEITUNGSVORRICHTUNG, MOBILES ENDGERÄT UND INFORMATIONSVERARBEITUNGSVERFAHREN
DISPOSITIF DE TRAITEMENT D'INFORMATIONS, TERMINAL MOBILE ET PROCÉDÉ DE TRAITEMENT D'INFORMATIONS

(30) Priority: 21.10.2019 JP 2019191650; 17.12.2019 JP 2019227649
(43) Date of publication of application: 28.04.2021
(73) Proprietor: Oki Electric Industry Co., Ltd., Minato-ku Tokyo 105-8460 (JP)
(72) Inventor: DEL ROSARIO, Rowel, Tokyo, 108-8551 (JP); TAKEYA, Hitoshi, Tokyo, 108-8551 (JP)
(74) Representative: Betten & Resch

(56) References cited:
- US-A1- 2015 103 374
- US-A1- 2015 278 564
- US-A1- 2016 219 433

## Description

### BACKGROUND OF THE INVENTION

### 1. Field of the Invention

The present invention relates to an information processing device and an information processing method.

### 2. Description of the Related Art

Conventionally, Near Field Communication (NFC) as technology for communicating information by means of short-range wireless communication using an electromagnetic field, radio waves, or the like is used.

For example, Nishimi in Japanese Patent Application Publication No. 2007-160903 discloses an image forming device on which the setting of set values can be made by use of NFC.

US 2016/219433 Al discloses that each of the first communication apparatus and the second communication apparatus includes a near field communication unit. The first communication apparatus acquires a public key stored in a memory of the near field communication unit of the second communication apparatus, encrypts, by using the acquired public key, data to be processed by the second communication apparatus, and transmits the encrypted data to the second communication apparatus. The second communication apparatus decrypts the transmitted encrypted data by a private key which corresponds to the public key and is stored in a memory of the second communication apparatus.

US 2015/278564 A1 discloses an information processing apparatus including a transmitting unit configured to, when a state of the information processing apparatus changes, transmit changed information which should be written to a non-contact IC tag to a terminal apparatus.

### SUMMARY OF THE INVENTION

However, by use of NFC, it is possible to make settings with ease just by acquiring a dedicated application program. Which enables a person who do not has an authority to make the setting of a value originally requiring the administrator authority, such as the setting of an IP address, with ease.

In contrast, if it is totally impossible to change a set value already written to an RFID tag used in NFC, working efficiency is sacrificed.

It is therefore an object of this disclosure to make it possible to appropriately handle a set value stored in a tag memory.

This object is solved by an information processing device according to independent claim 1 and an information processing method according to independent claim 5. Embodiments are defined in the dependent claims.

There is disclosed an information processing device according to an aspect of this disclosure performs processing according to a set value represented by device setting information. The information processing device includes: a tag memory configured to store set value information representing an update set value for updating the device setting information, the tag memory being for wireless communicating; a detection section configured to detect status of the information processing device when the set value information is stored in the tag memory; and an information setting section configured to incorporate the set value information into the device setting information. The tag memory is able to receive writing of the set value information even when power of the information processing device is off. The information setting section does not incorporate the set value information into the device setting information when the status of the information processing device is predetermined status.

According to one or more aspects of the present invention, the set value stored in the tag memory can be handled appropriately.

### BRIEF DESCRIPTION OF THE DRAWINGS

Fig. 1 is a block diagram schematically illustrating the configuration of an information processing system including an information processing device according to a first embodiment.
Fig. 2 is a block diagram schematically illustrating the configuration of an NFC unit of the information processing device.
Fig. 3 is a block diagram schematically illustrating the configuration of an NFC unit of a mobile terminal, which is not covered by the claims but helpful for understanding the present invention.
Fig. 4 is a block diagram schematically illustrating functions implemented by a CPU and a host controller of the information processing device according to the first embodiment.
Fig. 5 is a block diagram schematically illustrating functions implemented by a CPU of the mobile terminal, which is not covered by the claims but helpful for understanding the present invention, in the first to third embodiments.
Figs. 6A and 6B are schematic diagrams for explaining information that is written to an NFC tag.
Figs. 7A and 7B are schematic diagrams for explaining device setting information.
Fig. 8 is a schematic diagram illustrating an example of a setting information selection screen image.
Fig. 9 is a schematic diagram illustrating a first example of a set value transmission screen image.
Fig. 10 is a schematic diagram illustrating a second example of a set value transmission screen image.
Fig. 11 is a schematic diagram illustrating a third example of a set value transmission screen image.
Fig. 12 is a flowchart illustrating an operation performed upon startup of a dedicated application section of the mobile terminal, which is not covered by the claims but helpful for understanding the present invention, in the first embodiment.
Fig. 13 is a schematic diagram illustrating an example of a setting selection error screen image.
Fig. 14 is a schematic diagram illustrating an example of setting selection information.
Fig. 15 is a flowchart illustrating an operation performed when the mobile terminal, which is not covered by the claims but helpful for understanding the present invention, in the first embodiment writes set value information to the information processing device.
Fig. 16 is a schematic diagram illustrating an example of a write error display screen image.
Fig. 17 is a flowchart illustrating an operation performed when the set value information has been written to the information processing device in the first embodiment.
Figs. 18A and 18B are schematic diagrams illustrating messages displayed on a display.
Fig. 19 is a schematic diagram illustrating setting conditions for making use of the set value information in the first embodiment.
Fig. 20 is a schematic diagram of correspondence information indicating correspondence relationship between setting items.
Fig. 21 is a block diagram schematically illustrating the configuration of an information processing system including an information processing device according to a second embodiment.
Fig. 22 is a block diagram schematically illustrating functions implemented by the CPU and the host controller of the information processing device in the second embodiment.
Fig. 23 is a flowchart illustrating an operation performed upon startup of a dedicated application section of a mobile terminal, which is not covered by the claims but helpful for understanding the present invention, in the second embodiment.
Fig. 24 is a schematic diagram illustrating a first example of the set value transmission screen image displayed in the second embodiment.
Fig. 25 is a schematic diagram illustrating an example of an authentication information input screen image in the second embodiment.
Fig. 26 is a schematic diagram illustrating a second example of the set value transmission screen image in the second embodiment.
Fig. 27 is a flowchart illustrating an operation performed when the mobile terminal, which is not covered by the claims but helpful for understanding the present invention, in the second embodiment writes the set value information to the information processing device.
Fig. 28 is a schematic diagram illustrating an example of information written to the NFC tag in the second embodiment.
Fig. 29 is a flowchart illustrating an operation performed when the set value information has been written to the information processing device according to the second embodiment.
Fig. 30 is a schematic diagram illustrating setting conditions for making use of the set value information in the second embodiment.
Fig. 31 is a block diagram schematically illustrating the configuration of an information processing system including an information processing device according to a third embodiment.
Fig. 32 is a block diagram schematically illustrating functions implemented by the CPU and the host controller of the information processing device in the third embodiment.
Fig. 33 is a flowchart illustrating an operation performed when the set value information has been written to the information processing device according to the third embodiment.
Fig. 34 is a block diagram schematically illustrating the configuration of an information processing system including an information processing device according to fourth and fifth embodiments.
Fig. 35 is a block diagram schematically illustrating the configuration of the NFC unit of the information processing device in the fourth embodiment.
Fig. 36 is a block diagram schematically illustrating the software configuration of the information processing device in the fourth embodiment.
Fig. 37 is a block diagram schematically illustrating the software configuration of a mobile terminal, which is not covered by the claims but helpful for understanding the present invention, in the fourth embodiment.
Figs. 38A and 38B are diagrams illustrating information written to the NFC tag in the fourth embodiment.
Fig. 39 is a diagram illustrating setting data in the fourth embodiment.
Figs. 40A and 40B are diagrams illustrating the device setting information in the fourth embodiment.
Fig. 41 is a diagram illustrating mapping information in the fourth embodiment.
Fig. 42 is a diagram illustrating a changing condition for changing the device setting information in the fourth embodiment.
Fig. 43 is a flowchart illustrating a rough scheme of the operation on the mobile terminal's side, which is not covered by the claims but helpful for understanding the present invention, in the fourth embodiment.
Fig. 44 is a diagram illustrating the configuration of a function selection screen in the fourth embodiment.
Fig. 45 is a flowchart illustrating the procedure of a setting data selection process performed by the mobile terminal, which is not covered by the claims but helpful for understanding the present invention, in the fourth embodiment.
Figs. 46A and 46B are diagrams illustrating the configuration of a setting data selection screen and a setting writing screen displayed on the mobile terminal, which is not covered by the claims but helpful for understanding the present invention, in the fourth embodiment.
Figs. 47A and 47B are diagrams illustrating the configuration of error screens displayed on the mobile terminal, which is not covered by the claims but helpful for understanding the present invention, in the fourth embodiment.
Fig. 48 is a flowchart illustrating the procedure of a setting writing process performed by the mobile terminal, which is not covered by the claims but helpful for understanding the present invention, in the fourth embodiment.
Fig. 49 is a first flowchart illustrating the procedure of a setting deletion operation performed by the mobile terminal, which is not covered by the claims but helpful for understanding the present invention, in the fourth embodiment.
Fig. 50 is a second flowchart illustrating the procedure of the setting deletion operation performed by the mobile terminal, which is not covered by the claims but helpful for understanding the present invention, in the fourth embodiment.
Figs. 51A to 51C are diagrams illustrating the configuration of a setting deletion screen, an error screen and a deletion execution screen displayed on the mobile terminal, which is not covered by the claims but helpful for understanding the present invention, in the fourth embodiment.
Figs. 52A to 52C are diagrams illustrating the configuration of a deletion completion screen, a deletion cancellation screen and an error screen displayed on the mobile terminal, which is not covered by the claims but helpful for understanding the present invention, in the fourth embodiment.
Fig. 53 is a diagram illustrating the configuration of a deletion cancellation completion screen displayed on the mobile terminal, which is not covered by the claims but helpful for understanding the present invention, in the fourth embodiment.
Fig. 54 is a flowchart illustrating the procedure of the operation on the information processing device's side in the fourth embodiment.
Figs. 55A and 55B are diagrams illustrating the configuration of a setting change completion screen and an error screen displayed on the information processing device in the fourth embodiment.
Fig. 56 is a diagram illustrating the software configuration of a mobile terminal, which is not covered by the claims but helpful for understanding the present invention, in the fifth embodiment.
Fig. 57 is a flowchart illustrating the procedure of a setting writing process performed by the mobile terminal, which is not covered by the claims but helpful for understanding the present invention, in the fifth embodiment.
Figs. 58A to 58C are diagrams illustrating the configuration of an operation selection screen, an error screen and an overwriting execution screen displayed on the mobile terminal, which is not covered by the claims but helpful for understanding the present invention, in the fifth embodiment.
Fig. 59 is a flowchart illustrating the procedure of a setting overwriting operation performed by the mobile terminal, which is not covered by the claims but helpful for understanding the present invention, in the fifth embodiment.
Fig. 60 is a diagram illustrating the configuration of the operation selection screen displayed on the mobile terminal, which is not covered by the claims but helpful for understanding the present invention, in the fourth embodiment.

### DETAILED DESCRIPTION OF THE INVENTION

### First Embodiment

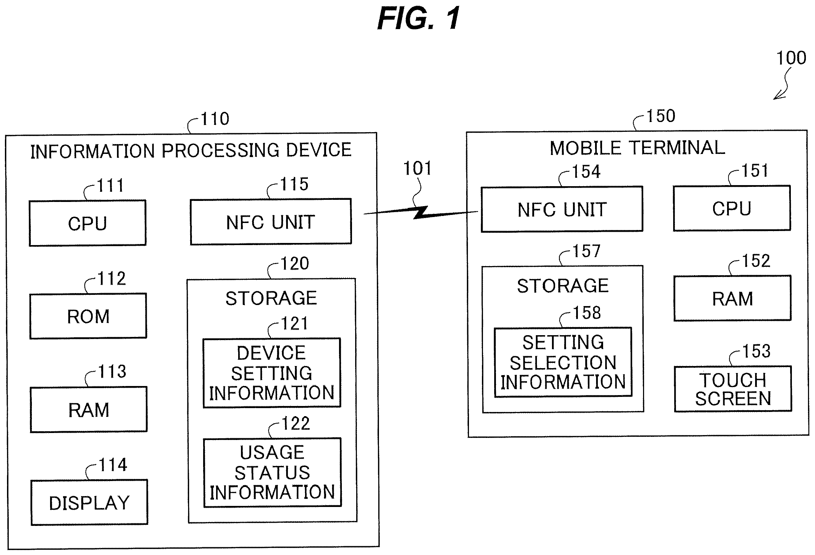

Fig. 1 is a block diagram schematically illustrating the configuration of an information processing system 100 including an information processing device 110 according to a first embodiment.

The information processing system 100 includes the information processing device 110 and a mobile terminal 150.

In the information processing system 100, when the mobile terminal 150 is put close to the information processing device 110, the mobile terminal 150 is capable of writing information to the information processing device 110 by means of NFC 101 and read information from the information processing device 110 by means of the NFC 101. In the NFC 101, electric power as supply power and source oscillation of the carrier wave are supplied from the mobile terminal 150 without the need of turning on the power of the information processing device 110. The method of supplying power may be either the electromagnetic induction method or the radio reflection method.

The information processing device 110 includes a CPU (Central Processing Unit) 111 as a processor, a ROM (Read Only Memory) 112 as a nonvolatile memory, a RAM (Random Access Memory) 113 as a volatile memory, a display 114, an NFC unit 115, and a storage 120 as a storage device.

The CPU 111 performs various calculations and controls the information processing device 110 by executing programs (e.g., communication control program).

The ROM 112 stores programs and information necessary for processing in the information processing device 110.

The RAM 113 provides a work area that is used when the CPU 111 executes various programs.

The display 114 functions as a display section that displays various screen images.

The NFC unit 115 functions as a short-range wireless communication section that performs the NFC 101.

The storage 120 functions as an auxiliary storage section that stores information necessary for processing in the information processing device 110. For example, the storage 120 includes device setting information 121 and usage status information 122.

The device setting information 121 represents a set value of each setting item necessary for processing in the information processing device 110. The information processing device 110 performs processing according to the set values represented by the device setting information 121.

The usage status information 122 represents status of the information processing device 110. In this example, the usage status information 122 represents whether the information processing device 110 is in a used state or not.

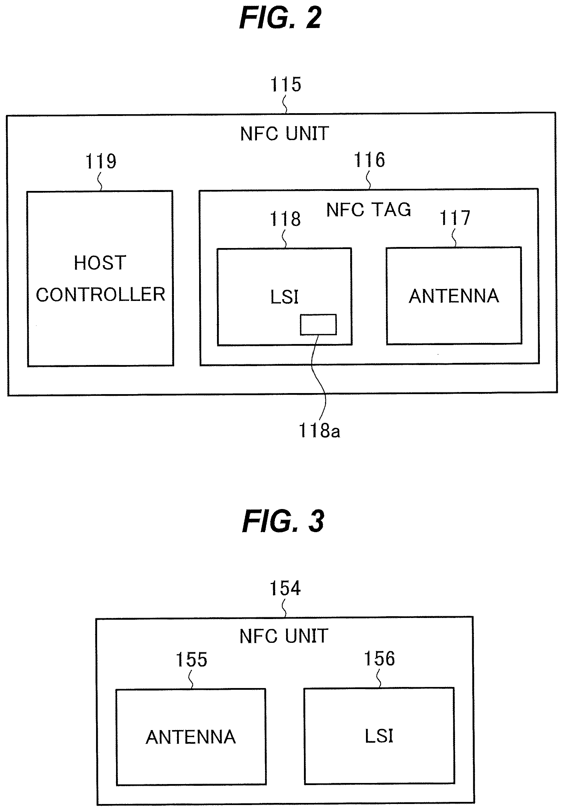

Fig. 2 is a block diagram schematically illustrating the configuration of the NFC unit 115.

The NFC unit 115 includes an NFC tag 116 and a host controller 119.

The NFC tag 116 includes an antenna 117 and an LSI (Large-Scale Integrated circuit) 118.

The antenna 117 transmits and receives radio waves (electromagnetic waves).

The LSI 118 is a wireless communication control section including circuits such as a modulation circuit that performs signal modulation, a demodulation circuit that performs signal demodulation, a power supply circuit, a control circuit that performs encoding, decoding, and so forth, and a memory 118a. When the power of the information processing device 110 is on, the LSI 118 performs processing by using electric power supplied from the information processing device 110. In contrast, when the power of the information processing device 110 is off, the LSI 118 performs processing by using electromotive force caused by radio waves (electromagnetic waves) received by the antenna 117. Thus, even when the power of the information processing device 110 is off, it is possible to write information to the memory 118a of the LSI 118 and also to read information from the memory 118a. Incidentally, the memory 118a is referred to also as a tag memory for wireless communication.

The host controller 119 is a host control section that controls the NFC 101 performed via the NFC tag 116.

To return to Fig. 1, the mobile terminal 150 includes a CPU 151, a RAM 152, a touch screen 153, an NFC unit 154 and a storage 157.

The CPU 151 performs various calculations and controls the mobile terminal 150 by executing programs.

The RAM 152 provides a work area that is used when the CPU 151 executes various programs.

The touch screen 153 is an input/output device that functions as a display section for displaying various screen images and an input section for receiving inputs of operations.

The NFC unit 154 functions as a short-range wireless communication section that performs the NFC 101. The NFC unit 154 of the mobile terminal 150 functions as a reader/writer capable of reading and writing information from/to the NFC tag 116 (Fig. 2) included in the NFC unit 115 of the information processing device 110.

The storage 157 is a storage section that stores information necessary for processing in the mobile terminal 150.

For example, the storage stores an OS (Operating System), various control programs, various application programs, and management information on each application program.

Further, the storage 157 stores setting selection information 158.

The setting selection information 158 represents a plurality of set values that can be set to the information processing device 110 in regard to each setting item of the information processing device 110.

Fig. 3 is a block diagram schematically illustrating the configuration of the NFC unit 154.

The NFC unit 154 includes an antenna 155 and an LSI 156.

The antenna 155 transmits and receives radio waves (electromagnetic waves).

The LSI 156 is a wireless communication control section including circuits such as a modulation circuit that performs signal modulation, a demodulation circuit that performs signal demodulation, a power supply circuit, a control circuit that performs encoding, decoding, and so forth, and a memory. The LSI 156 of the mobile terminal 150 receives the supply of the electric power from the mobile terminal 150 and performs the NFC 101 according to control by the CPU 151.

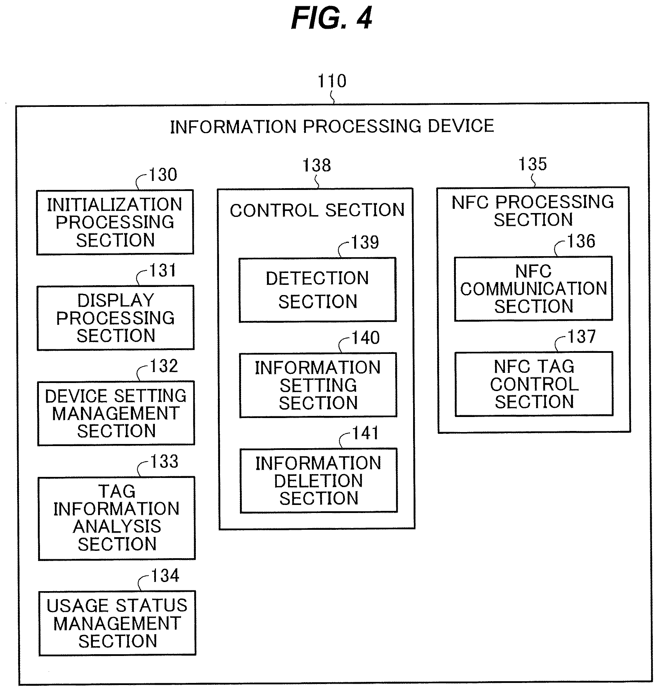

Fig. 4 is a block diagram schematically illustrating functions implemented by the CPU 111 and the host controller 119 of the information processing device 110.

The functional blocks illustrated in Fig. 4 are implemented by the CPU 111 and the host controller 119 executing corresponding programs.

The information processing device 110 includes an initialization processing section 130, a display processing section 131, a device setting management section 132, a tag information analysis section 133, a usage status management section 134, an NFC processing section 135 and a control section 138.

The initialization processing section 130 is called up first upon startup of the information processing device 110 and performs an initialization process of the information processing device 110. For example, when the power of the information processing device 110 is turned on, the initialization processing section 130 determines via the NFC processing section 135 whether or not set value information has been stored in the memory 118a of the NFC tag 116. The set value information represents an update set value as a new set value for updating the device setting information 121. The memory 118a of the NFC tag 116 functions as a storage section.

The display processing section 131 performs a process of displaying result of processing, such as an error, on the display 114.

The device setting management section 132 manages the device setting information 121 on the information processing device 110 stored in the storage 120.

The tag information analysis section 133 analyzes the contents of the information stored in the NFC tag 116.

The usage status management section 134 manages the usage status information 122 stored in the storage 120 according to the status of the information processing device 110.

The NFC processing section 135 controls the NFC 101 performed via the NFC unit 115. As mentioned earlier, the NFC processing section 135 is capable of performing the processing by using the supply power supplied from the mobile terminal 150 even when the power of the information processing device 110 is not turned on.

The NFC processing section 135 includes an NFC communication section 136 and an NFC tag control section 137.

The NFC communication section 136 controls the NFC unit 115 and thereby performs a process of transmitting and receiving information by means of the NFC 101.

The NFC tag control section 137 controls a process of reading information from the NFC tag 116 or writing information to the NFC tag 116.

The control section 138 controls processing in the information processing device 110 by controlling the operation of the initialization processing section 130, the display processing section 131, the device setting management section 132, the tag information analysis section 133, the usage status management section 134 and the NFC processing section 135.

For example, the control section 138 includes a detection section 139, an information setting section 140 and an information deletion section 141.

At the startup of the information processing device 110, if the initialization processing section 130 confirms that the set value information has been stored in the memory 118a of the NFC tag 116, the detection section 139 detects the status of the information processing device 110. For example, the detection section 139 detects whether the information processing device 110 is in the used state or not by referring to the usage status information 122 via the usage status management section 134.

The information setting section 140 incorporates the set value information stored in the memory 118a of the NFC tag 116 into the device setting information 121. For example, the information setting section 140 incorporates the set value information into the device setting information 121 when the status of the information processing device 110 is not predetermined status, and does not incorporate the set value information into the device setting information 121 when the status of the information processing device 110 is the predetermined status.

Specifically, when the information processing device 110 is not in the used state according to the result of the detection by the detection section 139, the information setting section 140 incorporates the set value represented by the set value information into the device setting information 121 via the device setting management section 132. In contrast, when the information processing device 110 is in the used state, the information setting section 140 does not incorporate the set value represented by the set value information into the device setting information 121.

The information deletion section 141 deletes the set value information stored in the memory 118a of the NFC tag 116 when the information setting section 140 has incorporated the set value represented by the set value information into the device setting information 121 or when the information setting section 140 has determined not to incorporate the set value represented by the set value information into the device setting information 121.

Here, the initialization processing section 130, the display processing section 131, the device setting management section 132, the tag information analysis section 133, the usage status management section 134 and the control section 138 are implemented by the CPU 111 executing corresponding programs. The NFC processing section 135 is implemented by the host controller 119 executing a corresponding program.

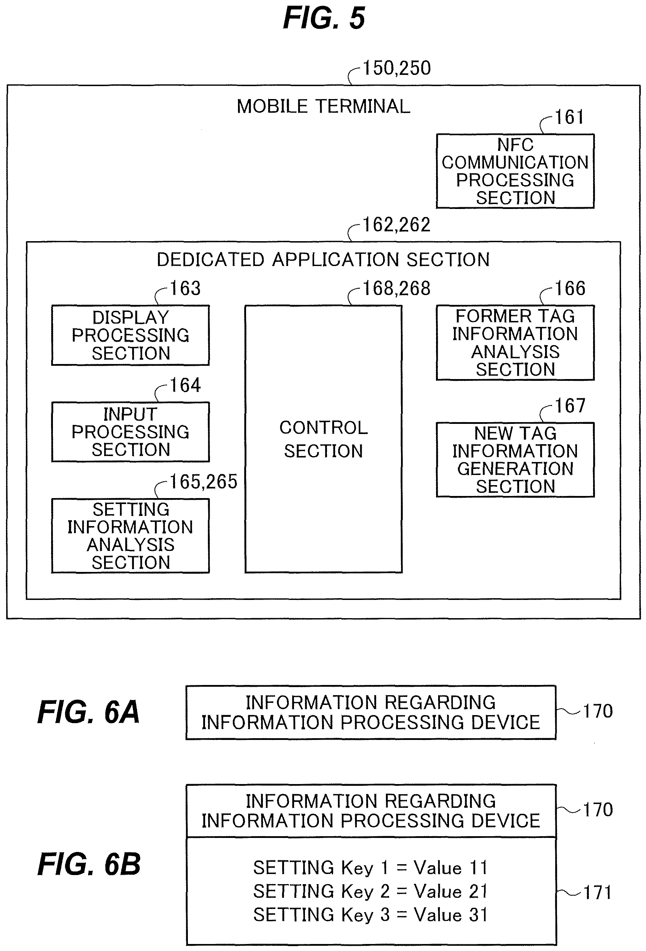

Fig. 5 is a block diagram schematically illustrating functions implemented by the CPU 151 of the mobile terminal 150.

The functional blocks illustrated in Fig. 5 are implemented by the CPU 151 executing corresponding programs.

The mobile terminal 150 includes an NFC communication processing section 161 and a dedicated application section 162.

The NFC communication processing section 161 controls the NFC unit 154 and thereby performs a process of transmitting and receiving information by means of the NFC 101.

The dedicated application section 162 is a functional block that is implemented by the CPU 151 executing a dedicated application for setting a desired set value to the information processing device 110.

For example, the dedicated application section 162 writes set value information to the NFC tag 116 in a predetermined format based on setting information selected by the user from the setting selection information 158 stored in the storage 157.

The dedicated application section 162 includes a display processing section 163, an input processing section 164, a setting information analysis section 165, a former tag information analysis section 166, a new tag information generation section 167 and a control section 168.

The display processing section 163 makes the touch screen 153 display various screen images.

The input processing section 164 receives inputs of commands regarding the setting of the information processing device 110 via the touch screen 153. For example, when the user touches a particular region of the touch screen 153, the input processing section 164 recognizes that a command corresponding to the region has been inputted by the user.

The setting information analysis section 165 analyzes the setting information selected by the user, generates a set value transmission screen image which will be described later, and makes the touch screen 153 display the screen image via the display processing section 163.

The former tag information analysis section 166 performs, via the NFC communication processing section 161, the analysis of the information read in from the NFC tag 116 of the information processing device 110 and determines whether or not the set value information has already been written to the NFC tag 116.

When the former tag information analysis section 166 determines that no set value information has been written to the NFC tag 116, the new tag information generation section 167 generates the set value information.

The control section 168 controls processing in the mobile terminal 150 by controlling the operation of the display processing section 163, the input processing section 164, the setting information analysis section 165, the former tag information analysis section 166 and the new tag information generation section 167.

For example, the control section 168 writes the set value information generated by the new tag information generation section 167 to the NFC tag 116 of the information processing device 110 via the NFC communication processing section 161.

The operation of the first embodiment will be described below.

In general, in order to change a set value of an information processing device, the user turns on the power of the information processing device, and when the information processing device has entered a waiting state, makes the information processing device display the set value of a pertinent setting item on a display or the like and performs an operation for changing the set value.

In contrast, if an NFC unit including an NFC tag is installed in the information processing device, it becomes possible to write a set value to the NFC tag of the information processing device from a mobile terminal without the need of turning on the power of the information processing device. When the power of the information processing device is turned on, the set value written to the NFC tag can be applied to the information processing device. Since the setting of a set value can be made in the state in which the power has not been turned on, the number of man-hours for setting a set value to a plurality of information processing devices can be reduced compared to conventional cases where the setting of a set value is made by taking out the information processing device one by one from a box.

For example, in cases where the information processing device is a printer as an image forming device, when a mobile terminal storing a set value (e.g., sheet size or language information) that is desired be set to the printer is put in proximity of the NFC tag of the printer that is not turned on, the set value stored in the mobile terminal is written to the NFC tag of the printer.

Thereafter, when the power of the printer is turned on, the printer reads the set value written to the NFC tag and incorporates the set value into the device setting information on the printer itself.

In cases where the NFC tag is used, efficiency of the work increases; however, there is a possibility that the set value is unconditionally applied to the information processing device and that leads to a problem in regard to security. Especially, a setting item requiring the administrator authority should not be changed unless the user is authenticated as the administrator. Even a dedicated application provided only to limited users has the danger of being acquired by an unauthorized user due to a leakage or the like.

To deal with such problems, in this embodiment, before applying the set value to the information processing device 110, whether the setting change is permitted or not is checked.

Details of the operation in the information processing system 100 in the first embodiment will be described below.

First, the description of the information processing device 110 will be given.

The NFC unit 115 including the NFC tag 116 is a component that is connected to the inside of the information processing device 110 and allows the mobile terminal 150 to read in the information stored in the NFC tag 116 and to write information to the NFC tag 116 when the mobile terminal 150 including the NFC unit 154 is put close to (referred to also as "put in proximity of") the NFC tag 116.

Further, since the supply power and the source oscillation of the carrier wave can be supplied to the NFC unit 115 from the mobile terminal 150, it is unnecessary to turn on the power of the information processing device 110 at times of reading/writing information from/to the NFC tag 116.

At the initial startup of the information processing device 110 in a factory or the like, a variety of information collected in regard to the information processing device 110 is written to the NFC tag 116. The information written to the NFC tag 116 includes information 170 regarding the information processing device as illustrated in Fig 6A, for example.

The information 170 regarding the information processing device includes, for example, information for identifying the information processing device 110 such as the name or serial number of the information processing device 110.

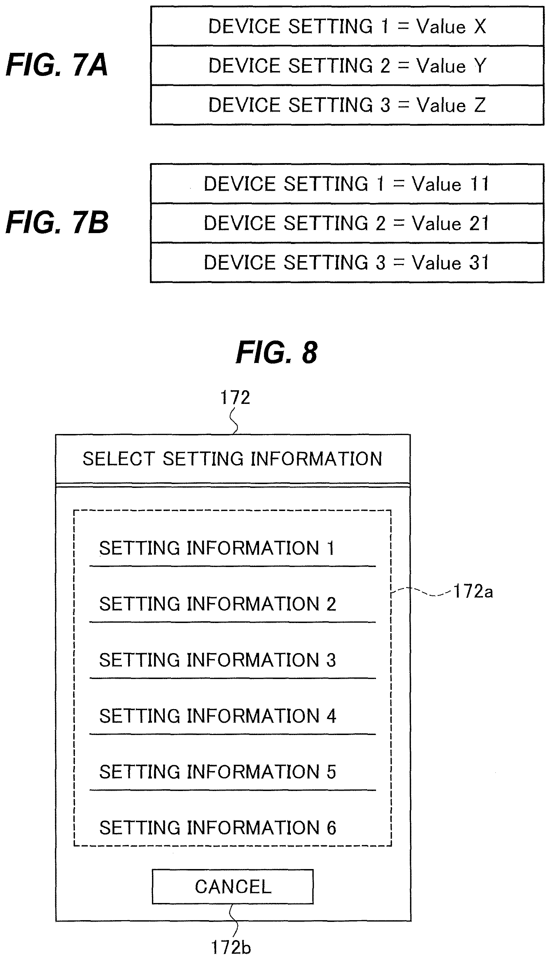

Further, in order for the information processing device 110 to provide various functions in a wide variety of environment, the device setting information 121 representing the set value of each setting item like that illustrated in Fig. 7A has been stored in the storage 120 inside the information processing device 110.

The device setting information 121 includes, for example, setting items like a setting item of language for setting the language in which the user interface is displayed on the display 114.

In each of various setting items, a default value is set as the set value at the time of factory shipment, and the user after the shipment can change the set value as needed.

However, everyone is not allowed to change every set value; there is the danger of unauthorized use by a third party if the set value of a setting item regarding network communication is changed illicitly. Therefore, there exist one or more setting items that allow only a user having the administrator authority to change them.

Further, the usage status information 122 indicating the usage status of the information processing device 110 has been stored in the storage 120 of the information processing device 110.

The usage status information 122 is initialized at the time of factory shipment so as to indicate a state before the start of use. When the user starts using the information processing device 110, the usage status information 122 changes to indicate a state after the start of use. For example, the usage status information 122 is information that is changed to "after the start of use" after the information processing device 110 incorporates the set value information stored in the NFC tag 116 into the device setting information 121.

The trigger for the change of the usage status information 122 from "before the start of use" to "after the start of use" may also be an event of changing a predetermined set value included in the device setting information 121, for example. For example, when a policy in which the use of the information processing device 110 cannot be started unless an administrator password (setting item) is changed from its default value (set value) is adopted, it can be considered that the use has already been started if the administrator password is changed from the default value to another one.

Further, the trigger for the change may also be an event in which the information processing device 110 performs a predetermined process. For example, in cases where the information processing device 110 is a printer, an event of acquiring a print job as an image formation job or an event of performing the printing as image formation according to a print job can be the trigger.

Furthermore, an event in which the user inputs a command of starting the use to the information processing device 110 can also be the trigger.

Incidentally, the usage status information 122 may also be configured to be included in the device setting information 121 as one of the setting items.

The information processing device 110 at the time of startup considers that a setting change is requested if set value information 171 like that illustrated in Fig. 6B has been written to the NFC tag 116 in a prescribed format. In this case, if the information processing device 110 is in the state before the start of use, the information processing device 110 changes set values represented by the device setting information 121 by using the set values represented by the set value information 171. Since the set value information 171 has become unnecessary after making the setting change, the set value information 171 is deleted and the information stored in the NFC tag 116 turns into a state like that illustrated in Fig. 6A.

Next, the description of the mobile terminal 150 will be given.

The dedicated application section 162 is formed in the mobile terminal 150 by previously installing a dedicated application program in the mobile terminal 150.

When the dedicated application section 162 is started up, a setting information selection screen image 172 illustrated in Fig. 8 is displayed on the touch screen 153.

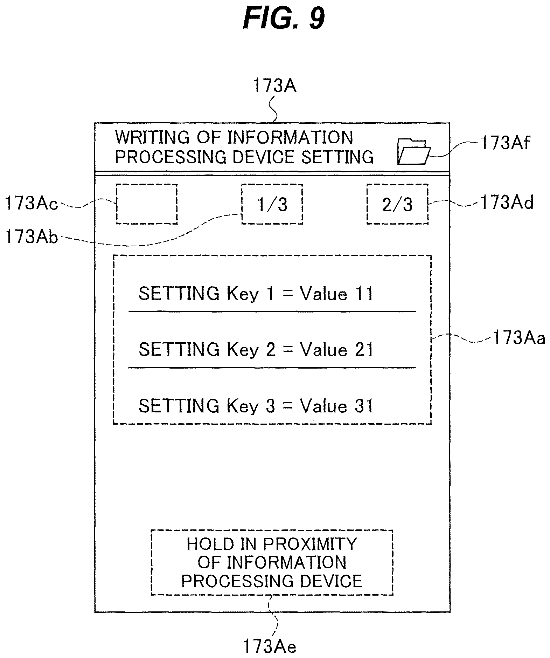

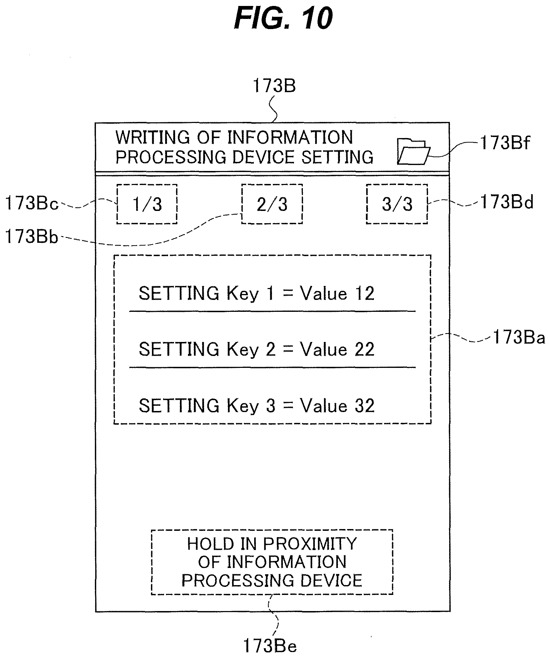

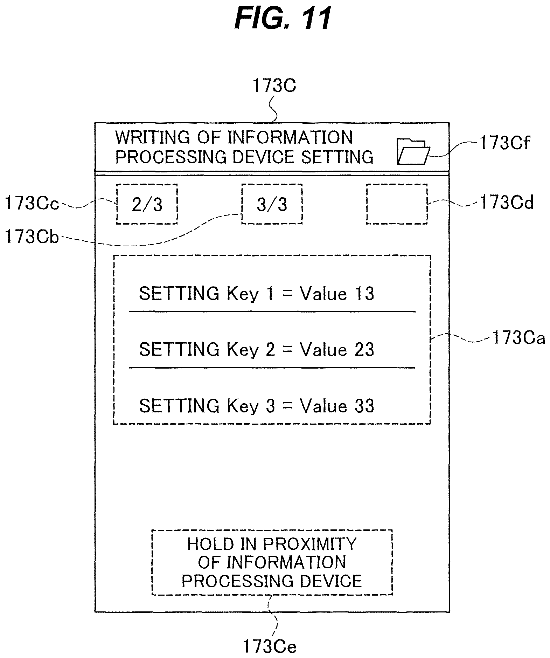

When setting information has been selected on the setting information selection screen image 172 by the user, the dedicated application section 162 first makes the touch screen 153 display a set value transmission screen image 173A illustrated in Fig. 9. Incidentally, when the user changes a set value in the selected setting information, the user can have a set value transmission screen image 173B illustrated in Fig. 10 or a set value transmission screen image 173C illustrated in Fig. 11 displayed on the touch screen 153 by performing a predetermined operation on the touch screen 153.

The set value transmission screen images 173A to 173C differ from each other in the set values. Incidentally, each of the set value transmission screen images 173A to 173C includes a message requesting the user to put the mobile terminal 150 in proximity of the information processing device 110.

When the mobile terminal 150 in the state of displaying one of the set value transmission screen images 173A to 173C is put in proximity of the NFC unit 115 of the information processing device 110, the NFC unit 154 of the mobile terminal 150 writes the set value information representing the set values included in the displayed one of the set value transmission screen images 173A to 173C to the NFC tag 116 in a predetermined format by means of the NFC 101.

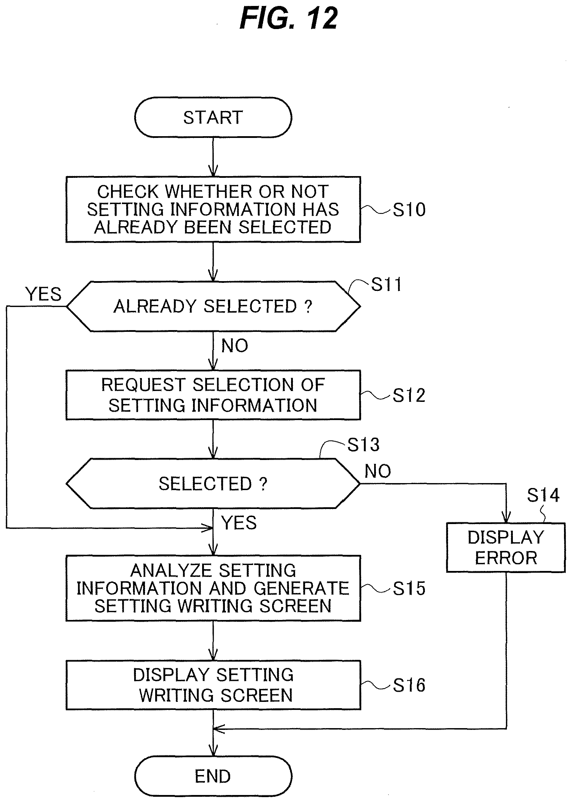

Fig. 12 is a flowchart illustrating an operation performed upon startup of the dedicated application section 162 of the mobile terminal 150.

First, the control section 168 checks whether or not setting information has already been selected (S10).

Then, the process proceeds to step S15 when setting information has already been selected (Yes in S11), or to step S12 when no setting information has been selected yet (No in S11). Once setting information is selected, the dedicated application section 162 stores information indicating that the selection has been made and the selected setting information, so that the result of the check at the next startup of the dedicated application section 162 becomes "already selected".

In the step S12, the control section 168 requests the user to select setting information. For example, the control section 168 commands the display processing section 163 and thereby makes the touch screen 153 display the setting information selection screen image 172 illustrated in Fig. 8.

As illustrated in Fig. 8, the setting information selection screen image 172 includes a setting information selection region 172a and a cancellation command input region 172b.

In the setting information selection region 172a, information for identifying multiple pieces of setting information is displayed and the user can touch a region displaying the information for identifying one of the multiple pieces of setting information and thereby select the corresponding setting information.

The cancellation command input region 172b is a region for inputting a command for canceling the selection of setting information. The user can cancel the selection of setting information by touching the cancellation command input region 172b.

To return to Fig. 12, in step S13, the control section 168 determines whether or not setting information has been selected on the setting information selection screen image 172 displayed in the step S12. The process proceeds to step S14 when the selection of setting information is canceled (No in S13), or to the step S15 when setting information has been selected (Yes in S13).

In the step S14, since the process of the dedicated application section 162 cannot be proceeded when there is no selection of setting information, the control section 168 commands the display processing section 163 and thereby makes the touch screen 153 display a setting selection error screen image.

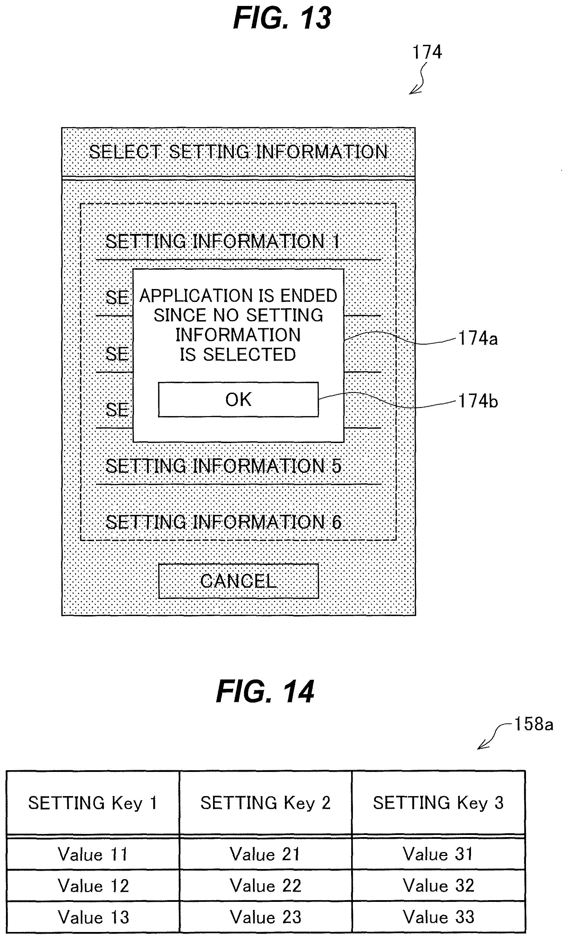

Fig. 13 is a schematic diagram illustrating an example of the setting selection error screen image.

As illustrated in Fig. 13, in the setting selection error screen image 174, a setting selection error display region 174a and an OK command input region 174b are superimposed on the setting information selection screen image.

Then, the user can end the process in the dedicated application section 162 by touching the OK command input region 174b.

To return to Fig. 12, in the step S15, according to the command from the control section 168, the setting information analysis section 165 refers to the setting selection information 158 stored in the storage 157 and analyzes the selected setting information in order to generate the set value transmission screen image.

The description here will be given by using an example in which the selected setting information in the setting selection information 158 is a setting table 158a illustrated in Fig. 14.

In the setting table 158a, each set value is associated with each of "SETTING Key 1", "SETTING Key 2" and "SETTING Key 3" that are setting items.

In this example, one row of the setting table 158a represents set values for one information processing device. In Fig. 14, set values to be set to three information processing devices are stored in the setting table 158a.

By analyzing the setting table 158a, the setting information analysis section 165 determines content to be displayed in set value display regions 173Aa to 173Ca, current page display regions 173Ab to 173Cb, previous page display regions 173Ac to 173Cc and next page display regions 173Ad to 173Cd of the set value transmission screen images 173A to 173C, adds message display regions Ae to Ce and open button display regions 173Af to 173Cf, and thereby generates the set value transmission screen images 173A to 173C, for example.

Specifically, numbers from 1 serially incremented by 1 have respectively been assigned to the rows of the setting table 158a serially from the top.

Each current page display region 173Ab - 173Cb indicates a fractional number whose numerator equals the number assigned to each row of the setting table 158a and whose denominator equals a number indicating the total number of rows, each previous page display region 173Ac - 173Cc displays the number of a row that is one row above, and each next page display region 173Ad - 173Cd displays the number of a row that is one row below. The previous page display region is left blank like the previous page display region 173Ac when there is no row that is one row above, and the next page display region is left blank like the next page display region 173Cd when there is no row that is one row below.

Each set value display region 173Aa - 173Ca displays the setting items and the set values in the row corresponding to the number in the current page display region 173Ab - 173Cb.

To return to Fig. 12, in step S16, the setting information analysis section 165 provides the display processing section 163 with the generated set value transmission screen images 173A to 173C, and the display processing section 163 makes the touch screen 153 display the set value transmission screen images 173A to 173C. In this example, the set value transmission screen image 173A corresponding to the number 1 is displayed first.

Incidentally, the user is capable of changing the page by performing a swipe operation as an operation of sliding a finger in contact with the touch screen 153. For example, the set value transmission screen images 173B is displayed in response to a swipe operation from right to left on the set value transmission screen images 173A, and the set value transmission screen images 173C is displayed in response to another swipe operation from right to left on the set value transmission screen images 173B.

It is also possible to switch the page in a reverse pattern by performing the swipe operation in the reverse direction. For example, the set value transmission screen images 173B is displayed in response to a swipe operation from left to right on the set value transmission screen images 173C, and the set value transmission screen images 173A is displayed in response to another swipe operation from left to right on the set value transmission screen images 173B.

Incidentally, when the user touches the open button display region 173Af - 173Cf, the setting information selection screen image 172 illustrated in Fig. 8 is displayed on the touch screen 153 and other setting information can be selected. Here, if the user touches the cancellation command input region 172b on the setting information selection screen image 172 without selecting other setting information, the setting information selection screen image 172 closes since setting information has already been selected, and the display on the touch screen 153 returns to the state before the open button display region 173Af - 173Cf was touched.

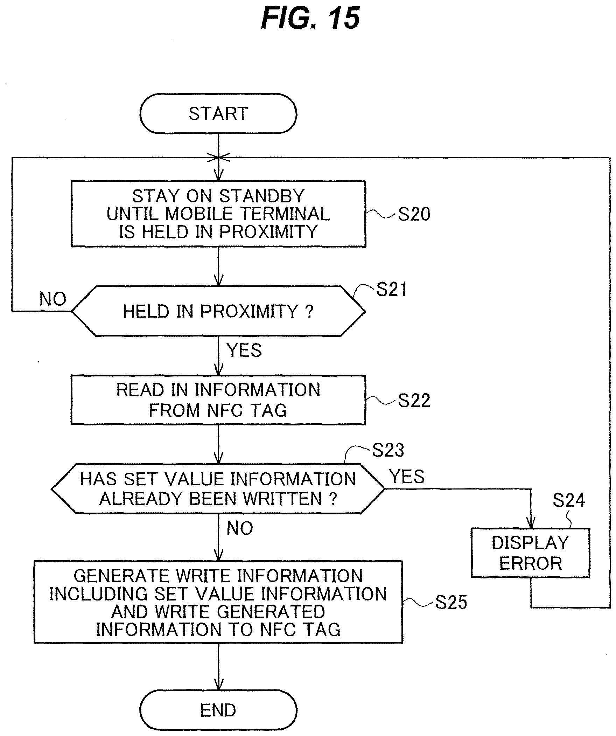

Finally, when the user puts the mobile terminal 150 displaying one of the set value transmission screen images 173A to 173C in proximity of the information processing device 110, set value information representing corresponding set values is written to the NFC tag 116. Details will be described below with reference to Fig. 15.

Fig. 15 is a flowchart illustrating an operation performed when the mobile terminal 150 writes the set value information to the information processing device 110.

The flowchart illustrated in Fig. 15 is started when one of the set value transmission screen images 173A to 173C is displayed on the touch screen 153.

First, the input processing section 164 stays on standby until the mobile terminal 150 is put in proximity of the information processing device 110 (S20). When the mobile terminal 150 is put in proximity of the information processing device 110 (Yes in S21), the process proceeds to step S22.

In the step S22, the control section 168 reads in via the NFC communication processing section 161 the information written to the NFC tag 116.

Subsequently, in response to a command from the control section 168, the former tag information analysis section 166 analyzes the information read in from the NFC tag 116 and determines whether or not set value information has already been written to the NFC tag 116 (S23). For example, the former tag information analysis section 166 determines that set value information has already been written to the NFC tag 116 if set value information is included in the information read in. Then, the process proceeds to step S24 when set value information has already been written to the NFC tag 116 (Yes in S23), or to step S25 when no set value information has been written to the NFC tag 116 (No in S23).

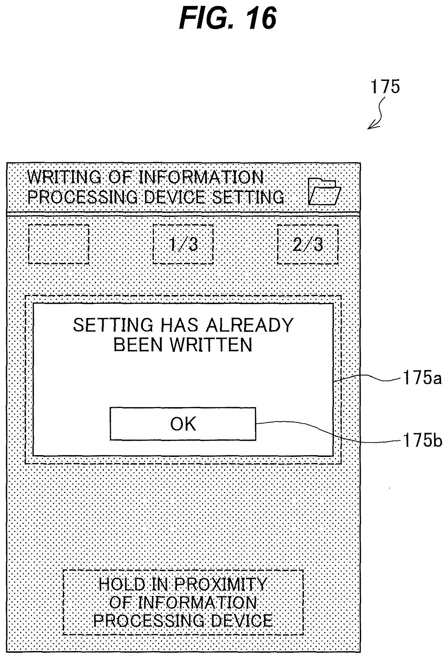

In the step S24, in response to a command from the control section 168, the display processing section 163 makes the touch screen 153 display a write error display screen image 175 like the one illustrated in Fig. 16.

Incidentally, in the write error display screen image 175, a write error display region 175a is superimposed on the set value transmission screen image.

The write error display region 175a displays a message of a write error and includes an OK button region 175b.

When the OK button region 175b is touched, the process returns to the step S20 and the set value transmission screen image is displayed which had been displayed before the write error display screen image 175 was displayed.

In the step S25, in response to a command from the control section 168, the new tag information generation section 167 generates the set value information in a predetermined format based on the set values included in the set value transmission screen image currently displayed. Then, the control section 168 writes the generated set value information to the NFC tag 116 via the NFC communication processing section 161.

Here, when the set value information is written to the NFC tag 116 in the step S25, the information that has been written to the NFC tag 116 changes from the state of Fig. 6A to the state of Fig. 6B, for example.

Incidentally, after the information written to the NFC tag 116 has changed to the state of Fig. 6B, when the operation illustrated in Fig. 15 is performed again from the start, it is determined in the step S23 that the set value information has already been written to the NFC tag 116, and the process proceeds to the step S24.

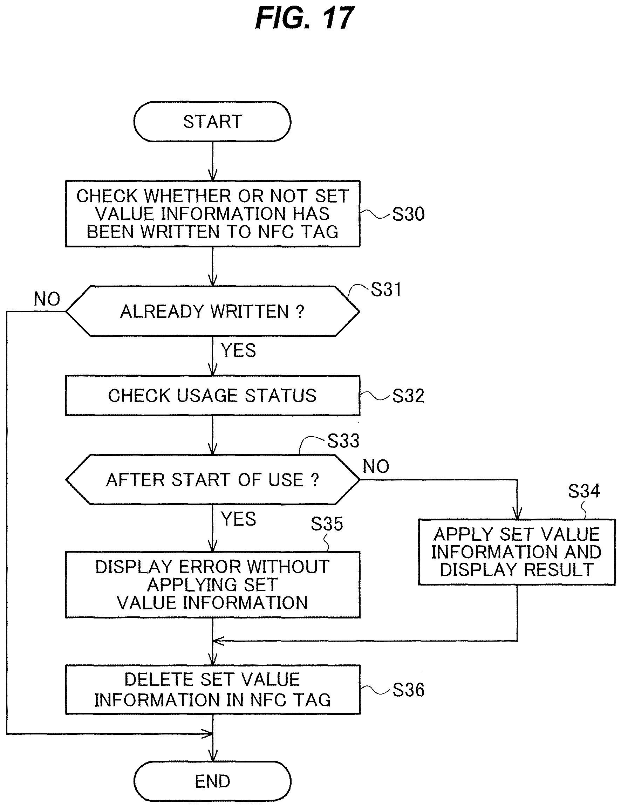

Fig. 17 is a flowchart illustrating an operation performed when the set value information has been written to the information processing device 110.

The flowchart illustrated in Fig. 17 is started upon startup of the information processing device 110.

First, the initialization processing section 130 reads in via the NFC tag control section 137 the information written to the NFC tag 116, analyzes the information read in, and determines whether or not set value information has been written to the NFC tag 116 (S30).

Then, the process proceeds to step S32 when set value information has been written (Yes in S31), or the process ends when no set value information has been written (No in S31).

In the step S32, the detection section 139 acquires the usage status information 122 indicating the usage status of the information processing device 110 from the usage status management section 134 and thereby checks the usage status of the information processing device 110.

Then, the process proceeds to step S34 when the usage status is before the start of use (No in S33), or to step S35 when the usage status is after the start of use (Yes in S33).

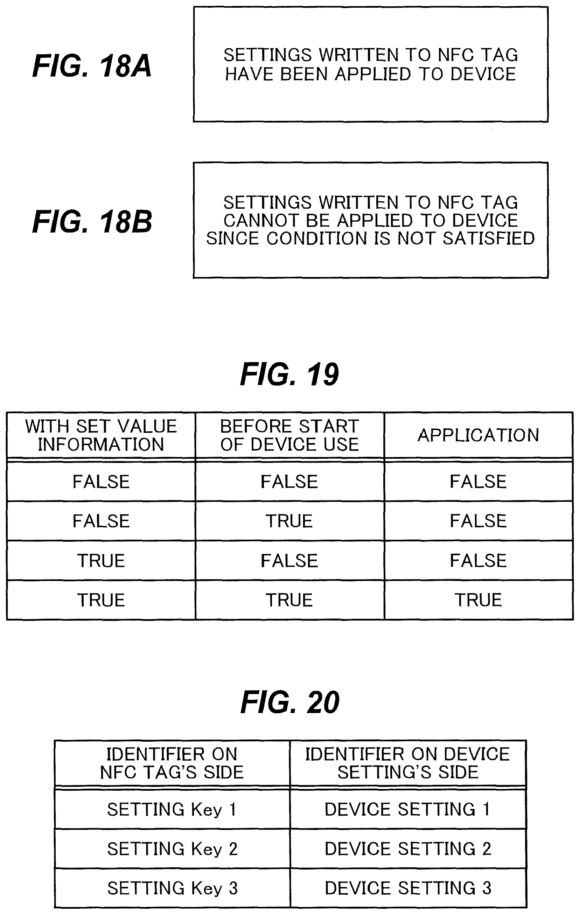

In the step S34, the information setting section 140 changes the set values of pertinent setting items in the device setting information 121 via the device setting management section 132 based on the set values represented by the set value information analyzed by the tag information analysis section 133. At this point, the information setting section 140 notifies the user of the result of the setting change process by commanding the display processing section 131 to display a change success message like the one illustrated in Fig. 18A on the display 114. Then, the process proceeds to step S36.

In the step S35, the setting change is not permitted, and thus the information setting section 140 notifies the user of the result of the setting change process by commanding the display processing section 131 to display a change error message like the one illustrated in Fig. 18B on the display 114. Then, the process proceeds to the step S36.

In the step S36, the information deletion section 141 deletes via the NFC tag control section 137 the set value information written to the NFC tag 116. Accordingly, the information stored in the NFC tag 116 returns from the state of Fig. 6B to the state of Fig. 6A, for example.

Here, the information setting section 140 makes the change in the set values according to setting conditions illustrated in Fig. 19. Specifically, only when set value information has been written to the NFC tag 116 (WITH SET VALUE INFORMATION = TRUE) and the use of the information processing device 110 has not been started (BEFORE START OF DEVICE USE = TRUE), the contents of the device setting information 121 are changed based on the set value information (APPLICATION = TRUE).

Accordingly, in the case where the device setting information 121 before the startup of the information processing device 110 was in the state illustrated in Fig. 7A, for example, the device setting information 121 is changed to a state like that illustrated in Fig. 7B based on the set value information.

Incidentally, the information setting section 140 determines which setting item of the device setting information 121 should be the target of the change based on correspondence information like that illustrated in Fig. 20, for example.

As described above, according to the first embodiment, although anybody (e.g., system integrator) can change a set value of the information processing device 110 in the state of factory shipment, it becomes impossible to change a set value with ease after the start of the use of the information processing device 110. This makes it possible to prevent the illicit changing of a set value by means of the NFC 101 without the need of turning on the power of the information processing device 110.

### Second Embodiment

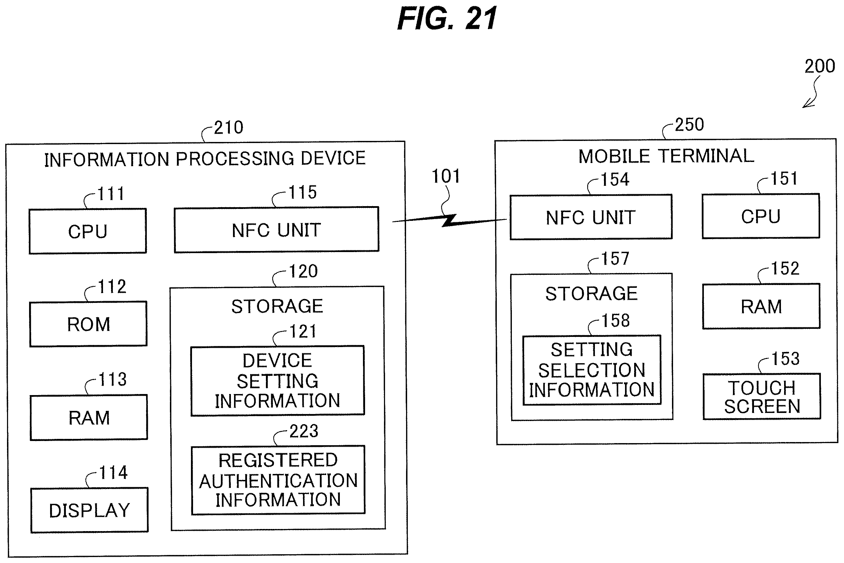

Fig. 21 is a block diagram schematically illustrating the configuration of an information processing system 200 including an information processing device 210 according to a second embodiment.

The information processing system 200 includes the information processing device 210 and a mobile terminal 250.

The information processing device 210 includes the CPU 111, the ROM 112, the RAM 113, the display 114, the NFC unit 115 and the storage 120.

The information processing device 210 according to the second embodiment differs from the information processing device 110 according to the first embodiment in that the storage 120 stores registered authentication information 223 instead of the usage status information 122 and in the processing performed by the CPU 111.

The registered authentication information 223 represents information that has been registered in order to perform authentication. In this example, the registered authentication information 223 stores a user name as user identification information for identifying a registered user and a password of the user while associating them with each other.

The mobile terminal 250 includes the CPU 151, the RAM 152, the touch screen 153, the NFC unit 154 and the storage 157.

The mobile terminal 250 in the second embodiment differs from the mobile terminal 150 in the first embodiment in the processing performed by the CPU 151.

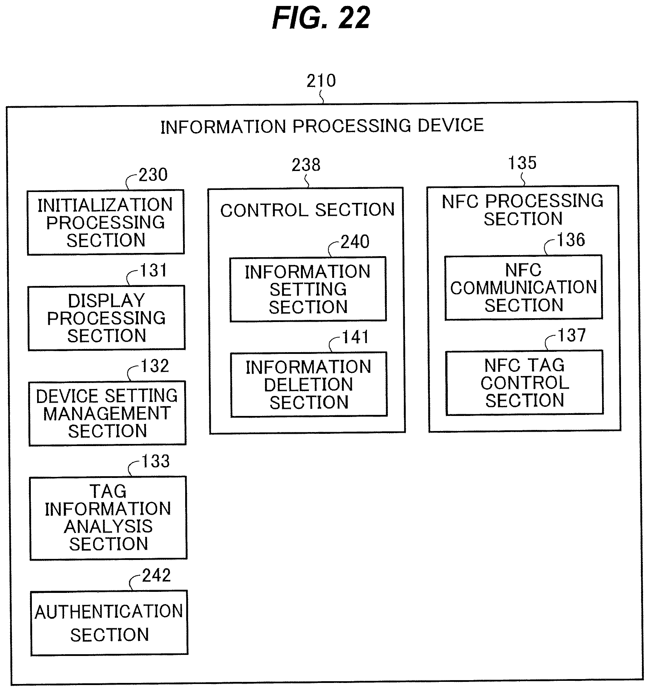

Fig. 22 is a block diagram schematically illustrating functions implemented by the CPU 111 and the host controller 119 of the information processing device 210 in the second embodiment.

The functional blocks illustrated in Fig. 22 are implemented by the CPU 111 and the host controller 119 executing corresponding programs.

The information processing device 210 includes an initialization processing section 230, the display processing section 131, the device setting management section 132, the tag information analysis section 133, the NFC processing section 135, a control section 238 and an authentication section 242.

The information processing device 210 in the second embodiment differs from the information processing device 110 in the first embodiment in including the authentication section 242 instead of the usage status management section 134, in processing performed by the initialization processing section 230, and in processing performed by the control section 238.

The initialization processing section 230 is called up first upon startup of the information processing device 210 and performs an initialization process of the information processing device 210. For example, when the power of the information processing device 210 is turned on, the initialization processing section 230 determines via the NFC processing section 135 whether or not the set value information and authentication information have been stored in the memory 118a of the NFC tag 116. The authentication information is information for performing the authentication.

In response to a command from the control section 238, the authentication section 242 authenticates the authentication information provided from the control section 238 by using the registered authentication information 223 stored in the storage 120. For example, the authentication section 242 performs the authentication based on whether or not a user name and a password represented by the authentication information are included in the registered authentication information 223. The authentication section 242 replies to the control section 238 with information indicating success or failure of the authentication as the result of the authentication.

The control section 238 controls processing in the information processing device 210 by controlling the operation of the initialization processing section 230, the display processing section 131, the device setting management section 132, the tag information analysis section 133, the NFC processing section 135 and the authentication section 242.

For example, the control section 238 includes an information setting section 240 and the information deletion section 141.

The information deletion section 141 of the control section 238 in the second embodiment is the same as the information deletion section 141 of the control section 138 in the first embodiment.

When the initialization processing section 230 determines that the set value information and the authentication information have been stored in the NFC tag 116, the information setting section 240 acquires the authentication information from the NFC tag 116 via the NFC processing section 135. Then, the information setting section 240 provides the authentication section 242 with the acquired authentication information and commands the authentication section 242 to authenticate the authentication information.

When the authentication by the authentication section 242 succeeds, the information setting section 240 incorporates the set values represented by the detected set value information into the device setting information 121 via the device setting management section 132. In contrast, when the authentication by the authentication section 242 fails, the information setting section 240 does not incorporate the set values represented by the detected set value information into the device setting information 121.

The initialization processing section 230, the control section 238 and the authentication section 242 described above are functions implemented by the CPU 111 executing corresponding programs.

As illustrated in Fig. 5, the functions implemented by the CPU 151 of the mobile terminal 250 in the second embodiment include the NFC communication processing section 161 and a dedicated application section 262.

The NFC communication processing section 161 of the mobile terminal 250 in the second embodiment is the same as the NFC communication processing section 161 in the first embodiment.

The dedicated application section 262 is a functional block that is implemented by the CPU 151 executing a dedicated application for setting a desired set value to the information processing device 210.

The dedicated application section 262 includes the display processing section 163, the input processing section 164, a setting information analysis section 265, the former tag information analysis section 166, the new tag information generation section 167 and a control section 268.

The display processing section 163, the input processing section 164, the former tag information analysis section 166 and the new tag information generation section 167 of the dedicated application section 262 in the second embodiment are the same as the display processing section 163, the input processing section 164, the former tag information analysis section 166 and the new tag information generation section 167 of the dedicated application section 162 in the first embodiment.

The setting information analysis section 265 analyzes the setting information selected by the user, generates a set value transmission screen image which will be described later, and makes the touch screen 153 display the screen image via the display processing section 163.

At this point, the setting information analysis section 265 receives an input of the authentication information via the set value transmission screen image.

The control section 268 controls processing in the mobile terminal 250 by controlling the operation of the display processing section 163, the input processing section 164, the setting information analysis section 265, the former tag information analysis section 166 and the new tag information generation section 167.

For example, the control section 268 writes the set value information, which is generated by the new tag information generation section 167, and the authentication information, the input of which the setting information analysis section 265 received, to the NFC tag 116 of the information processing device 110 via the NFC communication processing section 161.

The operation of the second embodiment will be described below.

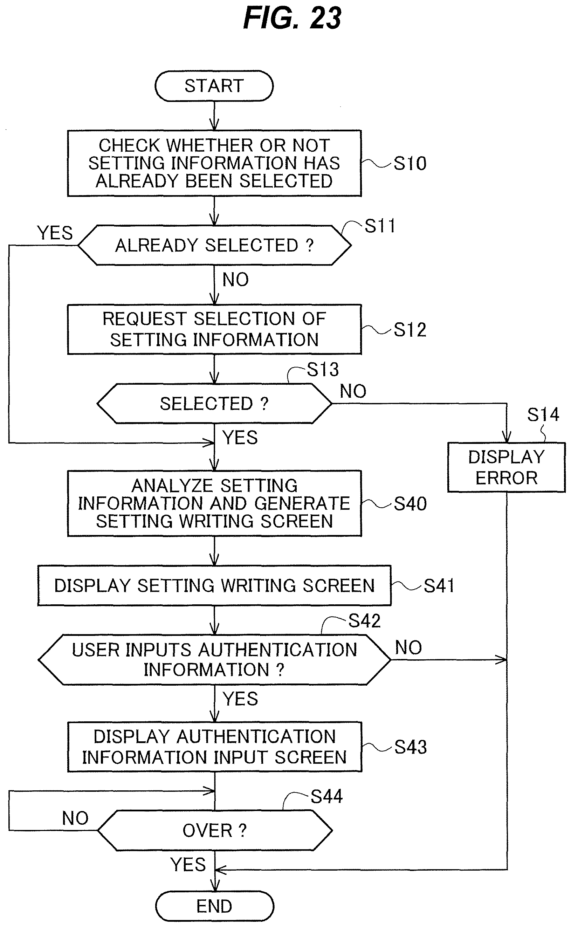

Fig. 23 is a flowchart illustrating an operation performed upon startup of the dedicated application section 262 of the mobile terminal 250.

Incidentally, among the processes illustrated in the flowchart of Fig. 23, the same processes as those in the flowchart of Fig. 12 are assigned the same reference characters as those in Fig. 12 and detailed description of those processes is omitted accordingly.

The processes of the steps S10 to S14 in the flowchart of Fig. 23 are the same as the processes of the steps S10 to S14 in the flowchart of Fig. 12.

In Fig. 23, however, when the determination in the step S13 is Yes, that is, when setting information has been selected, the process proceeds to step S40.

In the step S40, in response to a command from the control section 268, the setting information analysis section 265 refers to the setting selection information 158 stored in the storage 157 in order to generate the set value transmission screen image, analyzes the selected setting information, and generates the set value transmission screen image.

While the setting information analysis section 165 in the first embodiment generates the set value transmission screen images 173A to 173C like those illustrated in Figs. 9 to 11, in the second embodiment, an authentication information input region is added to each set value transmission screen image used in the first embodiment.

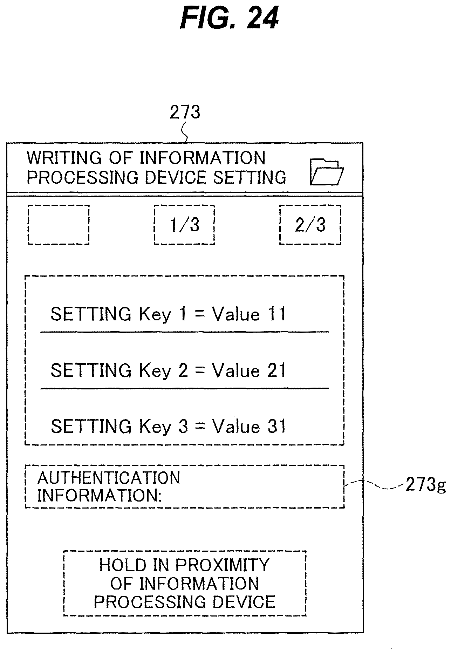

Fig. 24 is a schematic diagram illustrating an example of the set value transmission screen image displayed in the second embodiment.

The set value transmission screen image 273 illustrated in Fig. 24 is an image that is displayed instead of the set value transmission screen image 173A illustrated in Fig. 9.

As illustrated in Fig. 24, the set value transmission screen image 273 includes an authentication information input command region 273g.

To return to Fig. 23, in step S41, the setting information analysis section 265 provides the display processing section 163 with the generated set value transmission screen image 273, and the display processing section 163 makes the touch screen 153 display the set value transmission screen image 273.

Subsequently, the setting information analysis section 265 determines whether or not the user is to input the authentication information (S42). For example, the setting information analysis section 265 determines that the user is to input the authentication information when the user touches the authentication information input command region 273g on the set value transmission screen image 273. The process proceeds to step S43 when the user is to input the authentication information (Yes in S42), or the process ends when the user is not to input the authentication information (No in S42).

In the step S43, the setting information analysis section 265 provides the display processing section 163 with an authentication information input screen image, and the display processing section 163 makes the touch screen 153 display the authentication information input screen image.

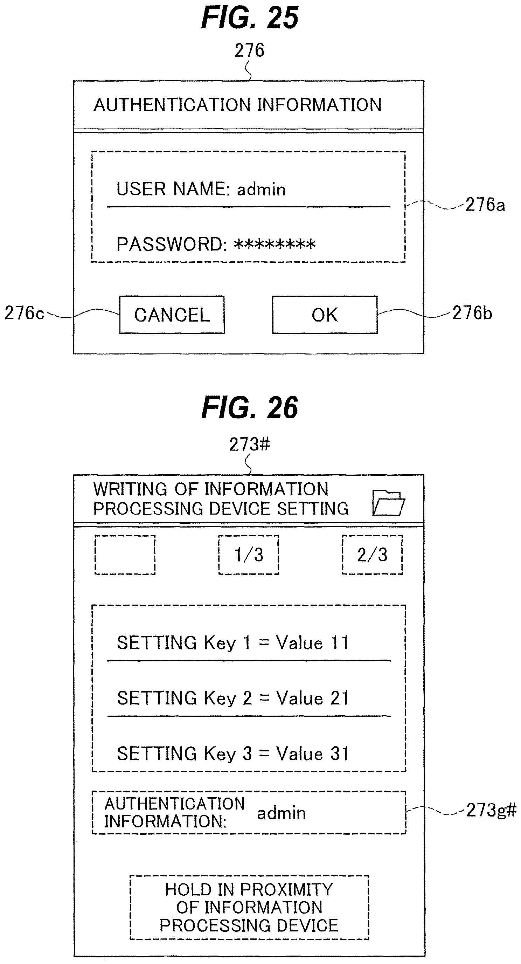

Fig. 25 is a schematic diagram illustrating an example of the authentication information input screen image.

As illustrated in Fig. 25, the authentication information input screen image 276 includes an authentication information input region 276a, an OK command input region 276b and a cancellation command input region 276c.

To return to Fig. 23, in step S44, the setting information analysis section 265 determines whether or not the input of the authentication information is over. For example, the setting information analysis section 265 determines that the input of the authentication information is over when the user touches the OK command input region 276b after inputting a user name and a password as the authentication information to the authentication information input region 276a by using the touch screen 153. Further, also when the user touches the cancellation command input region 276c, irrespective of whether there is an input of the authentication information or not, the setting information analysis section 265 determines that the input of the authentication information is over.

When the input of the authentication information is over (Yes in S44), the process ends.

Here, when the OK command input region 276b is touched, the setting information analysis section 265 notifies the control section 268 of the inputted authentication information. In this case, the inputted user name is displayed in an authentication information input command region 273g# as in a set value transmission screen image 273# illustrated in Fig. 26.

In contrast, when the cancellation command input region 276c is touched, the setting information analysis section 265 notifies the information setting section 240 that no setting information was inputted.

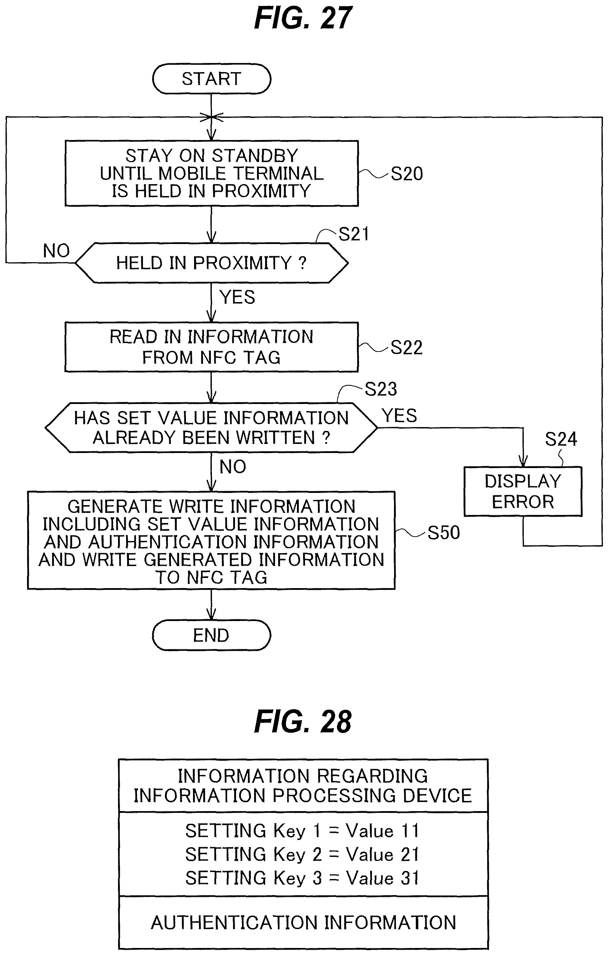

Fig. 27 is a flowchart illustrating an operation performed when the mobile terminal 250 in the second embodiment writes the set value information to the information processing device 210.

Among the processes illustrated in the flowchart of Fig. 27, the same processes as those included in the flowchart of Fig. 15 are assigned the same reference characters as those in Fig. 15 and detailed description of those processes is omitted accordingly.

The processes of the steps S20 to S24 in Fig. 27 are the same as the processes of the steps S20 to S24 in Fig. 15. However, when the determination in the step S23 is No, that is, when no set value information has been written to the NFC tag 116 of the information processing device 210, the process proceeds to step S50.

In the step S50, in response to a command from the control section 268, the new tag information generation section 167 generates set value information of a predetermined type based on the set values included in the set value transmission screen image currently displayed and converts the format of the authentication information provided from the control section 268 into a format for writing to the NFC tag 116. Then, the control section 268 writes the generated set value information and the converted authentication information to the NFC tag 116 via the NFC communication processing section 161.

Here, when the set value information and the authentication information are written in the step S50, the information that has been written to the NFC tag 116 changes from the state of Fig. 6A to the state of Fig. 28, for example.

Incidentally, when the mobile terminal 250 in the state of displaying the set value transmission screen image 273 before inputting of the authentication information as illustrated in Fig. 24 is put in proximity of the information processing device 210, the authentication information illustrated in Fig. 28 indicates that there exists no authentication information.

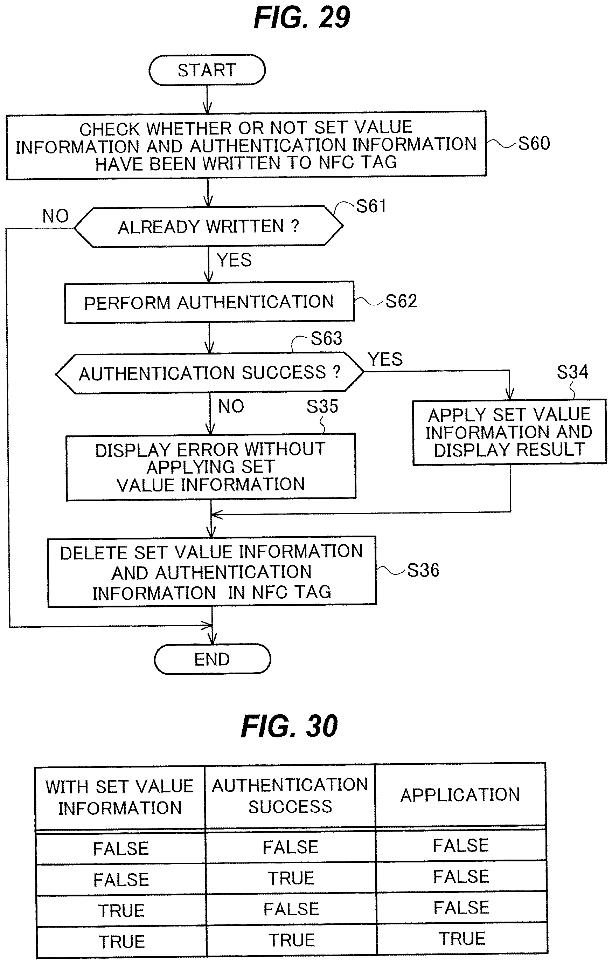

Fig. 29 is a flowchart illustrating an operation performed when the set value information has been written to the information processing device 210.

The flowchart illustrated in Fig. 29 is started upon startup of the information processing device 210.

Incidentally, among the processes included in the flowchart of Fig. 29, the same processes as those included in the flowchart of Fig. 17 are assigned the same reference characters as those in Fig. 17 and detailed description of those processes is omitted accordingly.

First, the initialization processing section 230 reads in via the NFC tag control section 137 the information written to the NFC tag 116, analyzes the information read in, and determines whether or not set value information and authentication information have been written to the NFC tag 116 (S60) .

Then, the process proceeds to step S62 when set value information and authentication information have been written to the NFC tag 116 (Yes in S61), or the process ends when no set value information has been written to the NFC tag 116 (No in S61).

In the step S62, in response to a command from the control section 238, the authentication section 242 performs the authentication on the authentication information provided from the control section 238 by using the registered authentication information 223 stored in the storage 120.

Then, the process proceeds to the step S34 when the authentication succeeds as the result of the authentication by the authentication section 242 (Yes in S63), or to the step S35 when the authentication fails (No in S63).

The processes of the steps S34 to S36 in Fig. 29 are the same as the processes of the steps S34 to S36 in Fig. 17.

As above, in the second embodiment, the set value information written to the NFC tag 116 is incorporated into the device setting information 121 only when set value information has been written to the NFC tag 116 (WITH SET VALUE INFORMATION = TRUE) and the authentication succeeds by use of the authentication information written to the NFC tag 116 (AUTHENTICATION SUCCESS = TRUE) as illustrated in Fig. 30. Incidentally, the authentication fails in the case where the authentication information written to the NFC tag 116 indicates that there exists no authentication information.

As described above, according to the second embodiment, it is possible to restrict the change of the device setting information 121 by means of the NFC 101 without the need of turning on the power of the information processing device 210 based on the result of the authentication. Since the device setting information 121 can be changed if the user has the authority, the convenience can be increased while preventing the illicit change of the device setting information 121.

### Third Embodiment

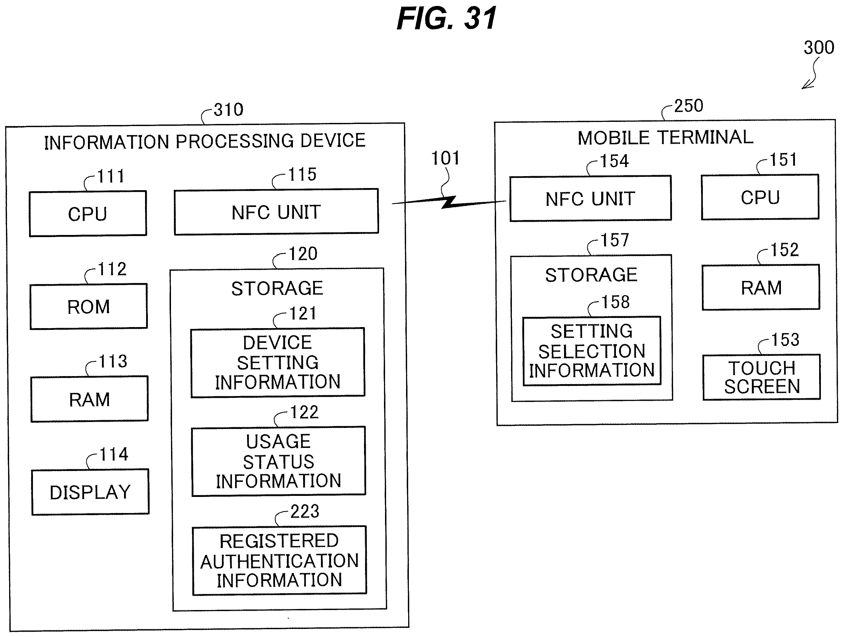

Fig. 31 is a block diagram schematically illustrating the configuration of an information processing system 300 including an information processing device 310 according to a third embodiment.

The information processing system 300 includes the information processing device 310 and the mobile terminal 250.

The mobile terminal 250 in the third embodiment is the same as the mobile terminal 250 in the second embodiment.

The information processing device 310 includes the CPU 111, the ROM 112, the RAM 113, the display 114, the NFC unit 115 and the storage 120.

The information processing device 310 according to the third embodiment differs from the information processing device 110 according to the first embodiment in that the registered authentication information 223 has been stored in the storage 120 and in the processing performed by the CPU 111.

Similarly to the second embodiment, the registered authentication information 223 represents information that has been registered in order to perform the authentication. In this example, the registered authentication information 223 stores a user name as user identification information for identifying a registered user and a password of the user while associating them with each other.

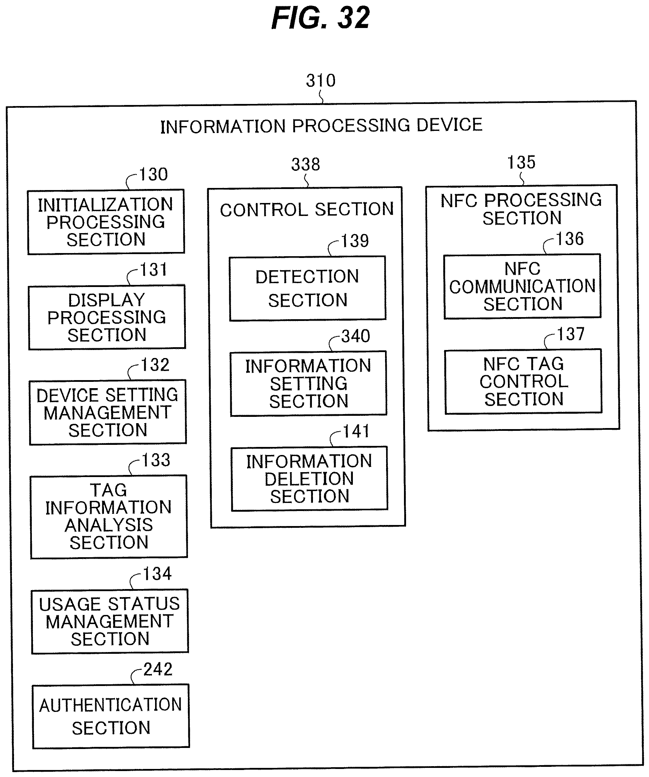

Fig. 32 is a block diagram schematically illustrating functions implemented by the CPU 111 and the host controller 119 of the information processing device 310 in the third embodiment.

The functional blocks illustrated in Fig. 32 are implemented by the CPU 111 and the host controller 119 executing corresponding programs.

The information processing device 310 includes the initialization processing section 130, the display processing section 131, the device setting management section 132, the tag information analysis section 133, the usage status management section 134, the NFC processing section 135, a control section 338 and the authentication section 242.

The information processing device 310 in the third embodiment differs from the information processing device 110 in the first embodiment in including the authentication section 242 and in processing performed by the control section 338.

Incidentally, the authentication section 242 of the information processing device 310 in the third embodiment is the same as the authentication section 242 of the information processing device 210 in the second embodiment.

The control section 338 controls processing in the information processing device 310 by controlling the operation of the initialization processing section 130, the display processing section 131, the device setting management section 132, the tag information analysis section 133, the usage status management section 134, the NFC processing section 135 and the authentication section 242.

For example, the control section 338 includes the detection section 139, an information setting section 340 and the information deletion section 141.

The detection section 139 and the information deletion section 141 of the control section 338 in the third embodiment are the same as the detection section 139 and the information deletion section 141 of the control section 138 in the first embodiment.

When the information processing device 310 is not in the used state according to the result of the detection by the detection section 139, the information setting section 340 acquires the authentication information from the NFC tag 116 via the NFC processing section 135. Then, the information setting section 340 provides the authentication section 242 with the acquired authentication information and commands the authentication section 242 to authenticate the authentication information.

When the authentication by the authentication section 242 succeeds, the information setting section 340 incorporates the set values represented by the detected set value information into the device setting information 121 via the device setting management section 132.

In contrast, when the information processing device 310 is in the used state or when the authentication by the authentication section 242 fails, the information setting section 340 does not incorporate the set values represented by the detected set value information into the device setting information 121.

The control section 338 described above is implemented by the CPU 111 executing a corresponding program.

The operation of the third embodiment will be described below.

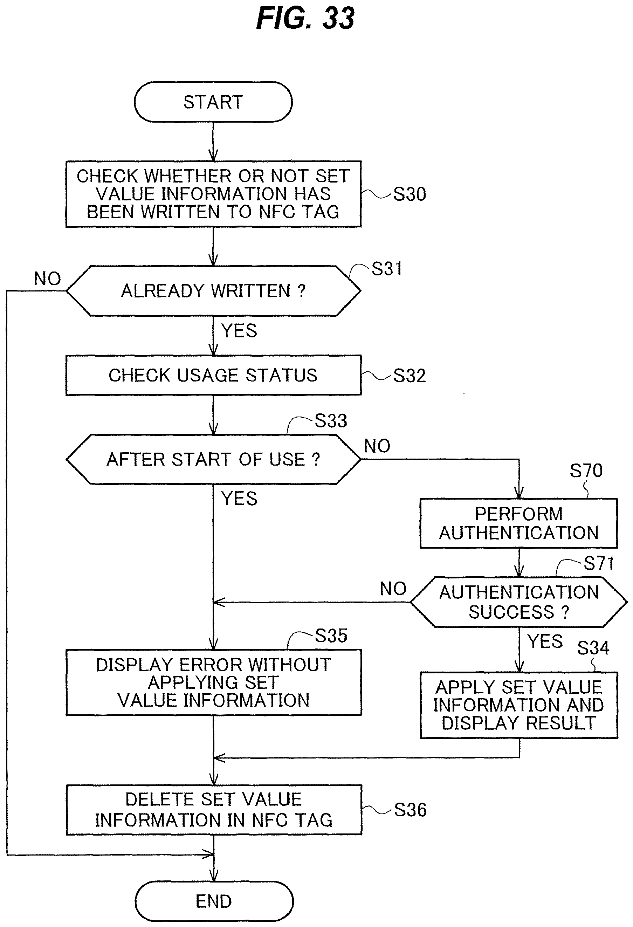

Fig. 33 is a flowchart illustrating an operation performed when the set value information has been written to the information processing device 310.

The flowchart illustrated in Fig. 33 is started upon startup of the information processing device 310.

Incidentally, among the processes included in the flowchart of Fig. 33, the same processes as those included in the flowchart of Fig. 17 are assigned the same reference characters as those in Fig. 17 and detailed description of those processes is omitted accordingly.

The processes of the steps S30 to S33 in Fig. 33 are the same as the processes of the steps S30 to S33 in Fig. 17. However, when the determination in the step S33 is No, that is, when the information processing device 310 is not in the used state, the process proceeds to step S70. In this case, the information setting section 340 acquires the authentication information from the NFC tag 116 via the NFC processing section 135 and provides the authentication section 242 with the acquired authentication information.

In the step S70, in response to a command from the control section 338, the authentication section 242 performs the authentication on the authentication information provided from the control section 338 by using the registered authentication information 223 stored in the storage 120.

Then, the process proceeds to the step S34 when the authentication succeeds as the result of the authentication by the authentication section 242 (Yes in S71), or to the step S35 when the authentication fails (No in S71).

The processes of the steps S34 to S36 in Fig. 33 are the same as the processes of the steps S34 to S36 in Fig. 17.

As described above, according to the third embodiment, the authentication is performed even when the information processing device 310 is not in the used state, by which the illicit change of the device setting information 121 can be prevented more securely.

The information processing device 110, 210, 310 described above can be any type of device as long as the device includes an NFC tag. For example, the information processing device 110, 210, 310 can be a device such as an image forming device like a printer, a facsimile machine or a multifunction device, an image capturing device like a camera or a video camera, a household electrical appliance like a television set, a refrigerator, an air conditioner or a cleaner, a computer, or the like.

### Fourth Embodiment

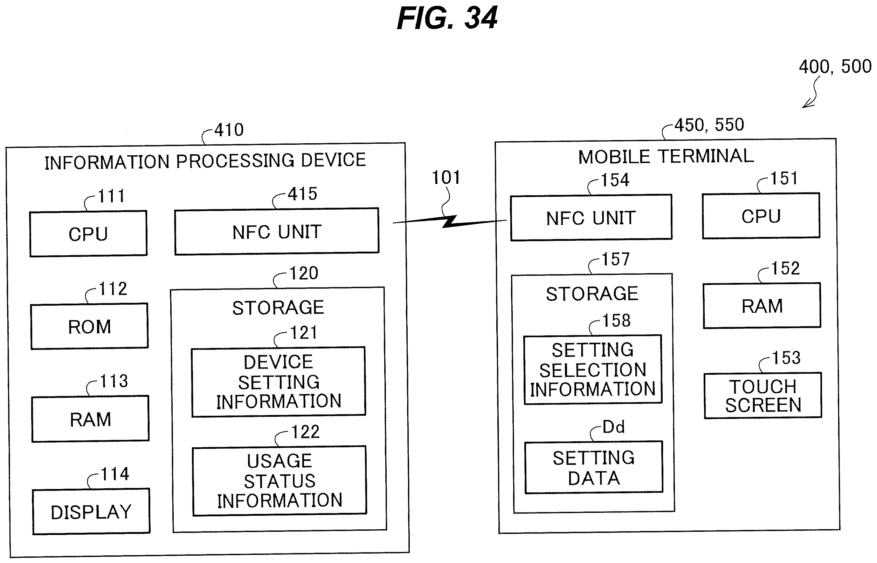

Fig. 34 is a block diagram schematically illustrating the configuration of an information processing system 400 including an information processing device 410 according to a fourth embodiment.

The information processing system 400 includes the information processing device 410 and a mobile terminal 450.

The information processing device 410 functions as a second device and the mobile terminal 450 functions as a first device. In this embodiment, the information processing device 410 is assumed to be a printer and the mobile terminal 450 is assumed to be a smartphone, for example.

The information processing device 410 includes the CPU 111, the ROM 112, the RAM 113, the display 114, an NFC unit 415 and the storage 120.

The information processing device 410 in the fourth embodiment differs from the information processing device 110 in the first embodiment in the processing performed by the CPU 111.

The mobile terminal 450 includes the CPU 151, the RAM 152, the touch screen 153, the NFC unit 154 and the storage 157.

The mobile terminal 450 in the fourth embodiment differs from the mobile terminal 150 in the first embodiment in the processing performed by the CPU 151.

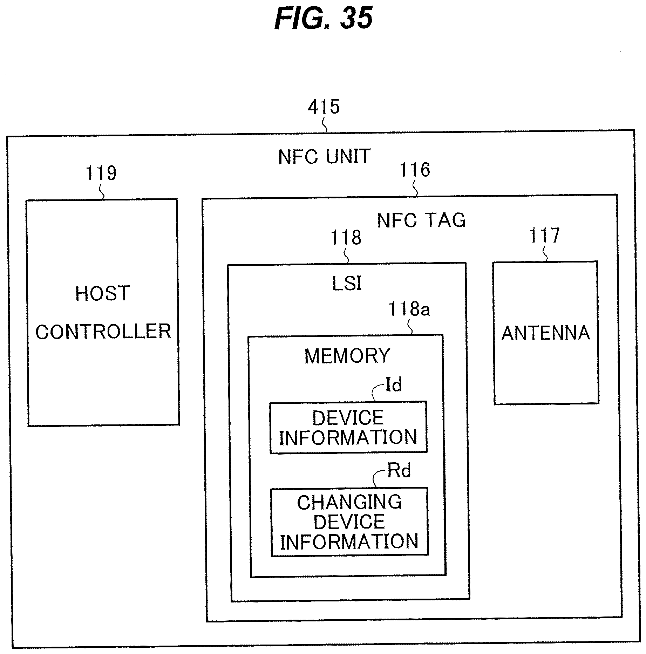

Fig. 35 is a block diagram schematically illustrating the configuration of the NFC unit 415.

The NFC unit 415 includes the NFC tag 116 and the host controller 119.

The NFC unit 415 of the information processing device 410 is provided with the NFC tag 116 as a storage medium. The device information Id regarding the information processing device 410 has previously been written to the NFC tag 116.

This device information Id includes device identification information (e.g., a device name and a serial number) capable of identifying the information processing device 410. The storage 120 of the information processing device 410 stores the device setting information 121 as setting information representing the set values of the information processing device 410.

The NFC unit 154 of the mobile terminal 450 serves as a reader/writer that reads information written to the NFC tag 116 of the information processing device 410 and writes information to the NFC tag 116.

In this information processing system 400, when the mobile terminal 450 is put in proximity of (brought close to) the information processing device 410, the supply power and the source oscillation of the carrier wave are supplied from the NFC unit 154 of the mobile terminal 450 to the NFC unit 415 of the information processing device 410, which enable the NFC unit 415 to operate. Namely, in this information processing system 400, even when the power of the information processing device 410 is off, putting the mobile terminal 450 in proximity of the information processing device 410 enables the NFC unit 154 of the mobile terminal 450 to make access to the NFC tag 116 via the NFC unit 415 of the information processing device 410.

Further, in this information processing system 400, by putting the mobile terminal 450 in proximity of the information processing device 410 when the power of the information processing device 410 is off, the changing setting information Rd as setting information for changing the setting of the information processing device 410 is written to the NFC tag 116 of the information processing device 410 from the mobile terminal 450. When the power of the information processing device 410 is thereafter turned on, the device setting information 121 stored in the storage 120 of the information processing device 410 is changed by using the changing setting information Rd written to the NFC tag 116.

Incidentally, although details will be described later, this information processing system 400 is configured so that it is also possible to delete the changing setting information Rd written to the NFC tag 116 of the information processing device 410 and to cancel the deletion from the mobile terminal 450's side while the power of the information processing device 410 remains off. Namely, the mobile terminal 450 is capable of performing information control on the NFC tag 116 of the information processing device 410 in the power-off state. The information control mentioned here includes reading of information, writing of information and deletion of information. For example, the device information Id has previously been written to the NFC tag 116, and the changing setting information Rd sent from the mobile terminal 450 is written to the NFC tag 116.

The storage 157 of the mobile terminal 450 stores an Operating System (OS) of the mobile terminal 450, various programs, various applications and management information on the various applications. Further, this storage 157 stores setting data Dd which is the source of the changing setting information Rd written to the NFC tag 116 of the information processing device 410. Furthermore, this storage 157 stores an application for writing the changing setting information Rd to the NFC tag 116 of the information processing device 410 in a prescribed format based on the setting data Dd selected by the user (hereinafter referred to as a device setting application) as one of the applications.

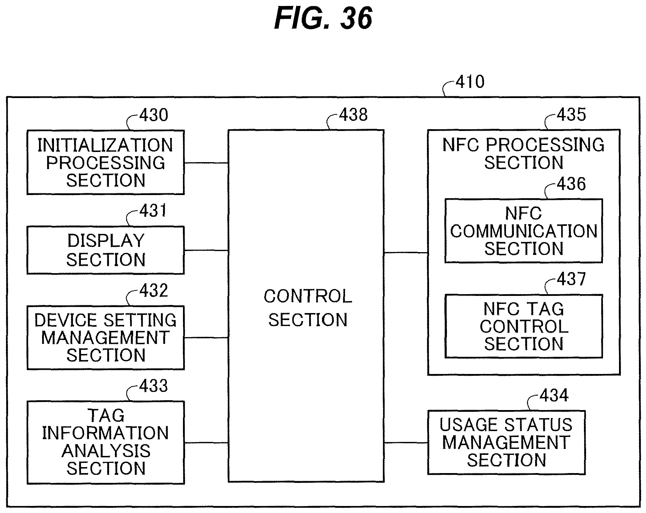

Fig. 36 is a block diagram schematically illustrating the software configuration of the information processing device 410 according to the fourth embodiment.

The information processing device 410 includes an initialization processing section 430, a display processing section 431, a device setting management section 432, a tag information analysis section 433, a usage status management section 434, an NFC processing section 435 and a control section 438.

The initialization processing section 430, the display processing section 431, the device setting management section 432, the tag information analysis section 433, the usage status management section 434 and the control section 438 are implemented by the CPU 111 executing predetermined programs.

The NFC processing section 435 is implemented by the LSI 118 executing firmware.

The initialization processing section 430, the display processing section 431, the device setting management section 432, the tag information analysis section 433, the usage status management section 434 and the control section 438 operate only when the information processing device 410 has been started up (the power is on). In contrast, the NFC processing section 435 operates only when the NFC unit 415 has been started up. Namely, the NFC processing section 435 operates by use of the supply power supplied from the mobile terminal 450 even when the information processing device 410 is not started up.

The initialization processing section 430 is a part called up first upon startup of the information processing device 410 and performs an initialization process of the information processing device 410.

The display processing section 431 makes the display 114 display information such as results of various processes.

The device setting management section 432 manages the device setting information 121 stored in the storage 120.

The tag information analysis section 433 analyzes the information written to the NFC tag 116.

The usage status management section 434 manages the usage status information 122 stored in the storage 120.

The NFC processing section 435 includes an NFC communication section 436 that controls the communication with the NFC unit 154 of the mobile terminal 450 and an NFC tag control section 437 that performs the reading and writing from/to the NFC tag 116.

The control section 438 controls the operation of the initialization processing section 430, the display processing section 431, the device setting management section 432, the tag information analysis section 433, the usage status management section 434 and the NFC processing section 435.

The software configuration of the information processing device 410 is as described above.

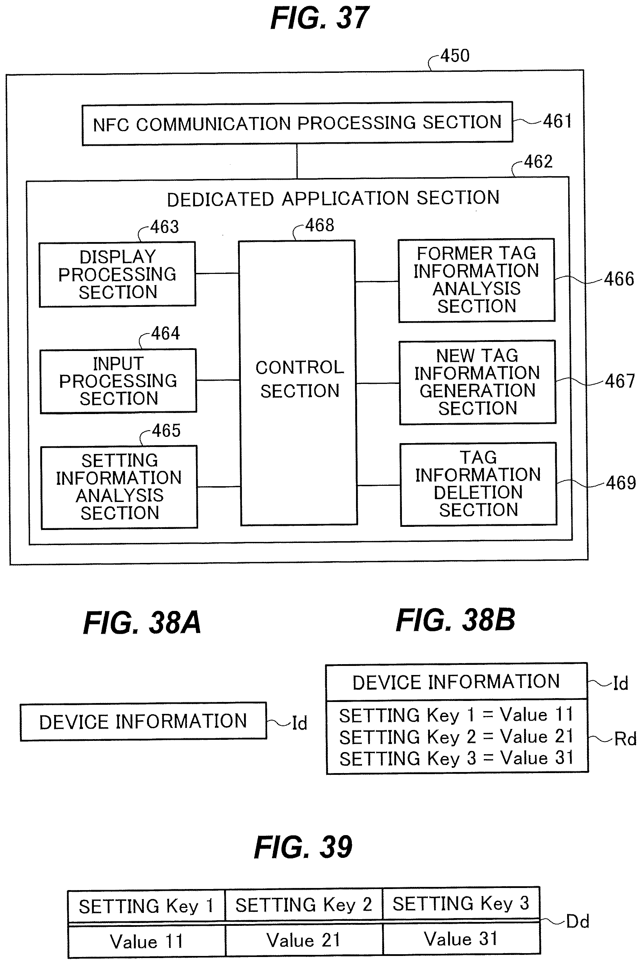

Fig. 37 is a block diagram schematically illustrating the software configuration of the mobile terminal 450 in the fourth embodiment.

The mobile terminal 450 includes, as software components, an NFC communication processing section 461 implemented by the LSI 156 executing firmware and a dedicated application section 462 implemented by the CPU 151 executing a device setting application.

The NFC communication processing section 461 controls the communication with the NFC unit 415 of the information processing device 410.

The dedicated application section 462 includes a display processing section 463, an input processing section 464, a setting information analysis section 465, a former tag information analysis section 466, a new tag information generation section 467, a control section 468 and a tag information deletion section 469.

The display processing section 463 makes the touch screen 153 display information such as various application screen images which will be described later.

The input processing section 464 receives commands inputted on various application screen images displayed on the touch screen 153 from the user.

The setting information analysis section 465 analyzes the setting data Dd selected by the user.

The former tag information analysis section 466 analyzes the information read in from the NFC tag 116 of the information processing device 410.

The new tag information generation section 467 generates the information, which includes the changing setting information Rd, to be written to the NFC tag 116.

The tag information deletion section 469 deletes the changing setting information Rd written to the NFC tag 116.

The control section 468 controls the operation of the display processing section 463, the input processing section 464, the setting information analysis section 465, the former tag information analysis section 466, the new tag information generation section 467 and the tag information deletion section 469.

The software configuration of the mobile terminal 450 is as described above.

The mobile terminal 450 provides the user with the function of writing the changing setting information Rd to the NFC tag 116 of the information processing device 410 by use of the new tag information generation section 467 of the dedicated application section 462.

The mobile terminal 450 provides the user with the function of deleting the changing setting information Rd written to the NFC tag 116 of the information processing device 410 by use of the tag information deletion section 469 of the dedicated application section 462.

The mobile terminal 450 provides the user with the function of canceling the deletion of the changing setting information Rd by use of the former tag information analysis section 466 and the new tag information generation section 467 of the dedicated application section 462.

Incidentally, an operation performed when the changing setting information Rd is written to the NFC tag 116, an operation performed when the changing setting information Rd written to the NFC tag 116 is deleted, and an operation performed when the deletion of the changing setting information Rd is canceled will be described later.

Next, various items of information handled in the information processing system 400 will be described below with reference to Fig. 38 to Fig. 41.

First, the information written to the NFC tag 116 of the information processing device 410 will be described with reference to Fig. 38A and Fig. 38B.

Fig. 38A illustrates the information written to the NFC tag 116 at the time of shipment of the information processing device 410. The initialization processing section 430 of the information processing device 410 is configured to collect information regarding the information processing device 410 from parts of the information processing device 410 and to write the collected information to the NFC tag 116 as the device information Id at the initial startup of the information processing device 410 in a factory or the like, for example. Incidentally, as mentioned earlier, this device information Id includes at least the device identification information capable of identifying the information processing device 410.

Fig. 38B illustrates the information written to the NFC tag 116 by the mobile terminal 450. As illustrated in Fig. 38B, the changing setting information Rd is written to the NFC tag 116 by the mobile terminal 450. At this point, the NFC tag 116 shifts to a state of storing the device information Id and the changing setting information Rd written thereto. The changing setting information Rd that has been written to the NFC tag 116 will be referred to also as already-written setting information.

Incidentally, the changing setting information Rd is formed with setting items (SETTING Key 1, SETTING Key 2, SETTING Key 3) and the set values (Value 11, Value 21, Value 31) of the setting items. Specifically, in this changing setting information Rd, the setting items and the set values are described in a format like SETTING Key 1 = Value 1, for example. Incidentally, according to the specifications of the NFC tag 116, the changing setting information Rd cannot be written to the NFC tag 116 unless the NFC tag 116 is in a state of storing no changing setting information Rd written thereto.

Next, the setting data Dd stored in the storage 157 of the mobile terminal 450 will be described with reference to Fig. 39. The setting data Dd is data to be used as the source of the changing setting information Rd and is formed with setting items (SETTING Key 1, SETTING Key 2, SETTING Key 3) and the set values (Value 11, Value 21, Value 31) of the setting items. Incidentally, the storage 157 of the mobile terminal 450 stores multiple pieces of setting data Dd differing from the setting data Dd illustrated in Fig. 39 in at least one of the setting items and the set values, and the user can select desired setting data Dd from the stored pieces of setting data Dd.

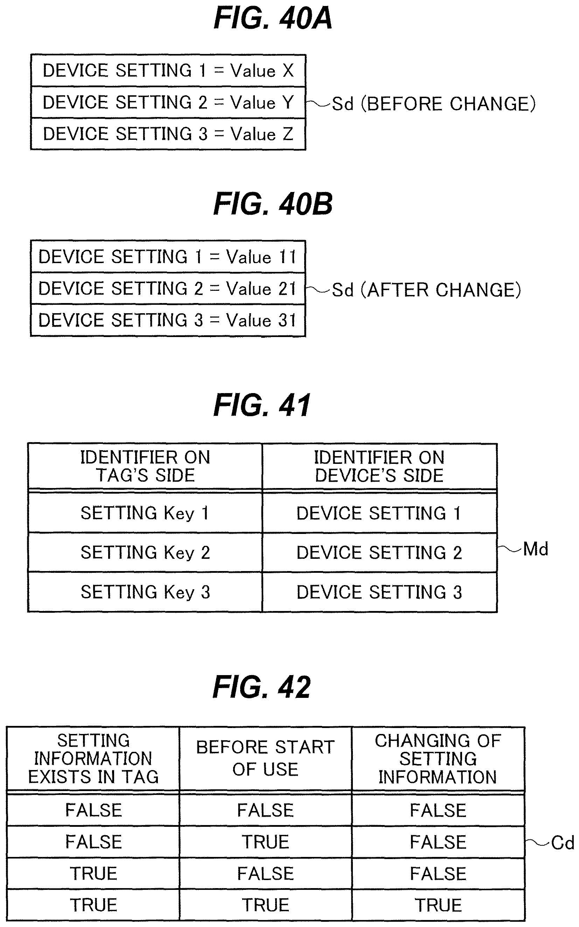

Next, the device setting information 121 stored in the storage 120 of the information processing device 410 will be described with reference to Figs. 40A and 40B.

Fig. 40A illustrates the device setting information 121 stored in the storage 120 at the time of shipment of the information processing device 410. As illustrated in Fig. 40A, the device setting information 121 is formed with setting items (DEVICE SETTING 1, DEVICE SETTING 2, DEVICE SETTING 3) and the set values (Value X, Value Y, Value Z) of the setting items.

Specifically, in the device setting information 121, the setting items and the set values are described in a format like DEVICE SETTING 1 = Value X, for example.

Incidentally, Value X, Value Y and Value Z are initial set values (default values) of the setting items.

Further, while the setting items described in the device setting information 121 are three setting items of DEVICE SETTINGS 1 to 3 in Fig. 40A for convenience of explanation, the fourth embodiment is not limited to such examples. For example, four or more setting items may be described in the device setting information 121.

In this regard, the device setting information 121 describes various setting items such as a language setting specifying the language displayed on the display 114 and a network setting for connecting to a network, for example. Similarly, the changing setting information Rd may also be configured to describe four or more setting items to adapt to the device setting information 121.

Fig. 40B illustrates the device setting information 121 after being changed by using the changing setting information Rd written to the NFC tag 116. Specifically, "DEVICE SETTING 1 = Value X" described in the device setting information 121 has been changed to "DEVICE SETTING 1 = Value 11" by using "SETTING Key 1 = Value 11" described in the changing setting information Rd, for example.

Incidentally, as illustrated in Fig. 41, the storage 120 of the information processing device 410 stores mapping information Md that associates identifiers (SETTING key 1, SETTING key 2, SETTING key 3) of the setting items described in the changing setting information Rd with identifiers (DEVICE SETTING 1, DEVICE SETTING 2, DEVICE SETTING 3) of the setting items described in the device setting information 121, and the setting items described in the changing setting information Rd and the setting items described in the device setting information 121 are associated with each other based on the mapping information Md. The various items of information handled in the information processing system 400 are as described above.

Here, a changing condition that is used when the device setting information 121 is changed based on the changing setting information Rd will be described with reference to Fig. 42.

As illustrated in Fig. 42, in the information processing device 410, the changing of the device setting information 121 is permitted ("CHANGING OF SETTING INFORMATION" in Fig. 42 becomes "TRUE") only when the changing setting information Rd has been written to the NFC tag 116 ("SETTING INFORMATION EXISTS IN TAG" in Fig. 42 is "TRUE") and the usage status of the information processing device 410 is "before the start of use" ("BEFORE START OF USE" in Fig. 42 is "TRUE"). Namely, the information processing device 410 is configured so that the rewriting of the device setting information 121 by using the NFC tag 116 cannot be performed after the start of use from the viewpoint of security.

In this regard, when the user wants to rewrite the device setting information 121 after the start of use, the user can make access to the information processing device 410 by using the mobile terminal 450 and log on a page for rewriting the device setting information 121 of the information processing device 410 by inputting an administrator ID and a password, for example. Incidentally, this changing condition is just an example; it is permissible even if a changing condition different from the changing condition illustrated in Fig. 42 is set for the information processing device 410 or no changing condition is set whatsoever.

Next, the operation of the information processing system 400 will be described below. In this description, the operation on the information processing device 410's side and the operation on the mobile terminal 450's side will be described separately from each other as the operation of the information processing system 400.

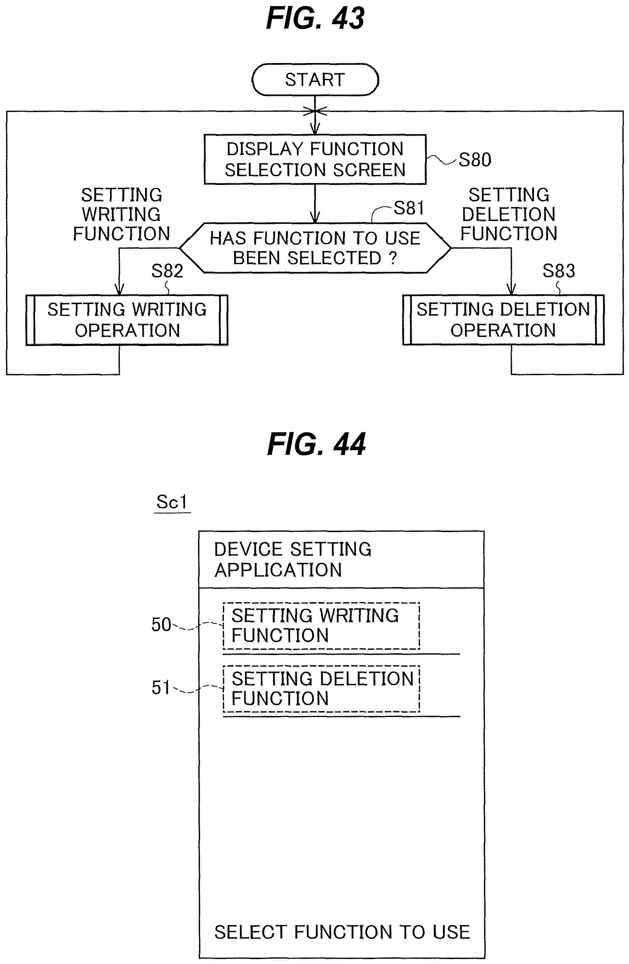

First, a rough scheme of the operation on the mobile terminal 450's side will be described below with reference to a flowchart illustrated in Fig. 43. Incidentally, the operation on the mobile terminal 450's side illustrated in Fig. 43 is an operation performed when the power of the information processing device 410 is off. Further, this operation is an operation performed by the dedicated application section 462 started up on the mobile terminal 450.

When the dedicated application section 462 is started up on the mobile terminal 450, in step S80, the control section 468 of the dedicated application section 462 controls the display processing section 463 and thereby makes the touch screen 153 of the mobile terminal 450 display a function selection screen image Sc1 illustrated in Fig. 44. This function selection screen image Sc1 is a screen image for letting the user select a function to use from functions of the dedicated application section 462.

In this function selection screen image Sc1, a selection item 50 indicating a function of writing the changing setting information Rd to the NFC tag 116 of the information processing device 410 (hereinafter referred to as a "setting writing function") and a selection item 51 indicating a function of deleting the changing setting information Rd written to the NFC tag 116 (hereinafter referred to as a "setting deletion function") are displayed. On this function selection screen image Sc1, the setting writing function can be selected by performing a touch operation on the selection item 50, and the setting deletion function can be selected by performing a touch operation on the selection item 51.

In the next step S81, the control section 468 of the dedicated application section 462 determines via the input processing section 464 whether or not a function to use has been selected on the function selection screen image Sc1. When the setting writing function has been selected, the control section 468 proceeds from the step S81 to step S82, performs a setting writing operation of writing the changing setting information Rd to the NFC tag 116 of the information processing device 410 (a detailed procedure will be described later), and returns to the step S80 when the setting writing operation is completed.

In contrast, when the setting deletion function has been selected, the control section 468 proceeds from the step S81 to step S83, performs a setting deletion operation of deleting the changing setting information Rd written to the NFC tag 116 (a detailed procedure will be described later), and returns to the step S80 when the setting deletion operation is completed. The rough scheme of the operation on the mobile terminal 450's side is as described above. Next, the setting writing operation and the setting deletion function will be described in turn.

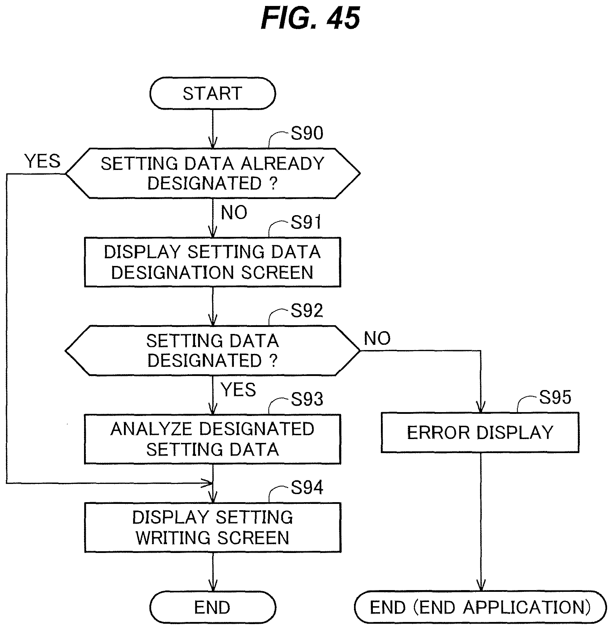

First, the setting writing operation will be described below. Upon starting the setting writing operation in response to the selection of the setting writing function on the function selection screen image Sc1 illustrated in Fig. 44, the control section 468 of the dedicated application section 462 first performs a setting data selection process for letting the user select setting data Dd to be used as the changing setting information Rd from the setting data Dd stored in the storage 157 of the mobile terminal 450. The procedure of this setting data selection process will be described below with reference to a flowchart illustrated in Fig. 45.

Upon starting the setting data selection process, the control section 468 of the dedicated application section 462 in step S90 checks whether or not setting data Dd has already been selected. Incidentally, the case where setting data Dd has already been selected is a case where the user selected the setting data Dd when the user used the setting writing function before. The control section 468 is configured to store the latest setting data Dd selected by the user in the storage 157, for example. The control section 468 determines that setting data Dd has already been selected if the setting data Dd has been stored in the storage 157, and that setting data Dd has not been selected yet (not already selected) if such setting data Dd has not been stored in the storage 157.

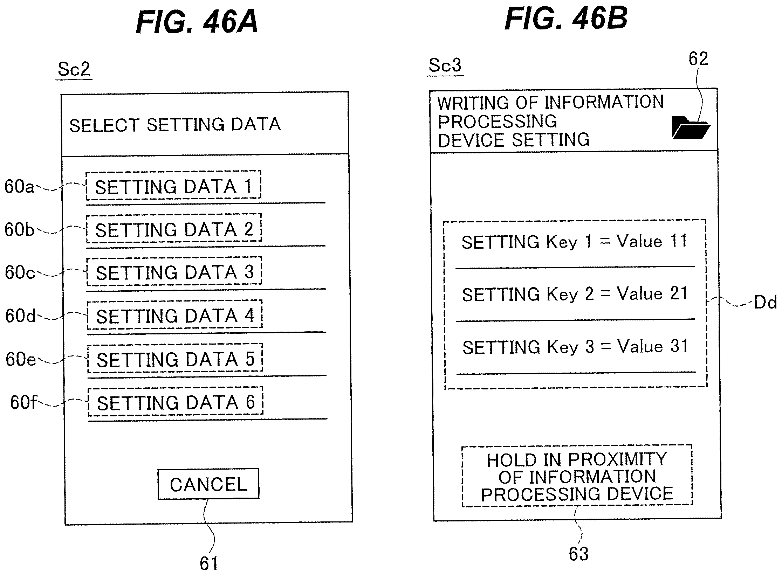

If setting data Dd is not already selected, the control section 468 obtains a negative result in the step S90 and proceeds to step S91. In the step S91, the control section 468 controls the display processing section 463 and thereby makes the touch screen 153 of the mobile terminal 450 display a setting data selection screen image Sc2 illustrated in Fig. 46A. This setting data selection screen image Sc2 is a screen image for letting the user select setting data Dd to be used as the changing setting information Rd from the setting data Dd stored in the storage 157 of the mobile terminal 450.

In this setting data selection screen image Sc2, a list of selection items 60 (60a to 60f) each of which indicates a piece of setting data Dd stored in the storage 157 is displayed. Incidentally, the selection items 60 (60a to 60f) are displayed as file names (SETTING DATA 1, SETTING DATA 2, ...) of the setting data Dd, for example. Further, in this setting data selection screen image Sc2, a cancel button 61 for canceling the selection of the setting data Dd is displayed. On this setting data selection screen image Sc2, desired setting data Dd can be selected by performing a touch operation on one of the selection items 60 (60a to 60f).

In the next step S92, the control section 468 determines whether or not setting data Dd has been selected on the setting data selection screen image Sc2. If the selection of setting data Dd is recognized via the input processing section 464, the control section 468 obtains an affirmative result in the step S92, proceeds to step S93, and makes the setting information analysis section 465 analyze the selected setting data Dd.

Specifically, the setting information analysis section 465 reads the selected setting data Dd from the storage 157, refers to setting items described in the setting data Dd and the set values of the setting items, and performs the analysis to determine what kind of set value has been set for which setting item, for example. Incidentally, this analysis in the step S93 may also be omitted. In contrast, it is also possible to end the setting data selection process because of an error or the like when an abnormal set value is found by the analysis in the step S93, for example.

In the next step S94, the control section 468 controls the display processing section 463 and thereby makes the touch screen 153 of the mobile terminal 450 display a setting writing screen image Sc3 illustrated in Fig. 46B. In this setting writing screen image Sc3, the contents of the setting data Dd selected by the user (setting items and their set values, such as SETTING key 1 = Value 11, for example), an icon 62 for returning to the setting data selection screen image Sc2, and a message 63 prompting the user to put the mobile terminal 450 in proximity of the information processing device 410 are displayed.

The user checks the contents of the setting data Dd on this setting writing screen image Sc3 and then puts the mobile terminal 450 in proximity of the information processing device 410. Incidentally, when the contents of the setting data Dd displayed on the setting writing screen image Sc3 are not the intended contents, the user can return to the setting data selection screen image Sc2 by performing the touch operation on the icon 62 and select different setting data Dd. After displaying the setting writing screen image Sc3, the control section 468 ends the setting data selection process and subsequently performs a setting writing process which will be described later.

In contrast, if setting data Dd has already been selected, the control section 468 obtains an affirmative result in the step S90, proceeds to the step S94, and controls the display processing section 463 and thereby makes the touch screen 153 of the mobile terminal 450 display the setting writing screen image Sc3 displaying the contents of the already selected setting data Dd. Thereafter, the control section 468 ends the setting data selection process and subsequently performs the setting writing process which will be described later.

Further, when a touch operation performed on the cancel button 61 on the setting data selection screen image Sc2 is recognized via the input processing section 464, the control section 468 obtains a negative result in the aforementioned step S92 and proceeds to step S95.

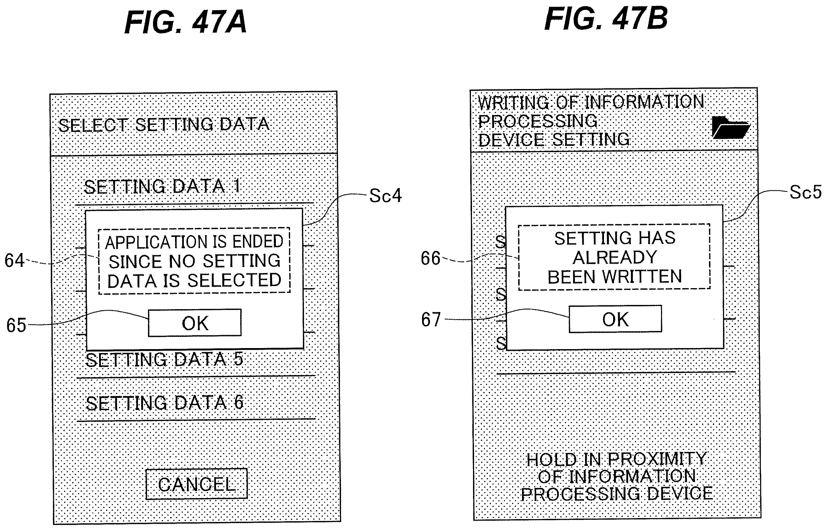

In the step S95, the control section 468 controls the display processing section 463 and thereby makes the touch screen 153 of the mobile terminal 450 display an error screen image Sc4 illustrated in Fig. 47A.

In this error screen image Sc4, an error message 64 indicating that the dedicated application section 462 is ended since no setting data Dd has been selected, and an OK button 65 are displayed. When a touch operation performed on the OK button 65 on the error screen image Sc4 is recognized via the input processing section 464, the control section 468 ends the setting data selection process and ends the dedicated application section 462. Incidentally, when the touch operation is performed on the cancel button 61 on the setting data selection screen image Sc2, it is also possible, instead of displaying the error screen image Sc4, to end the setting data selection process and return to the function selection screen image Sc1 illustrated in Fig. 44, for example. The procedure of the setting data selection process is as described above.

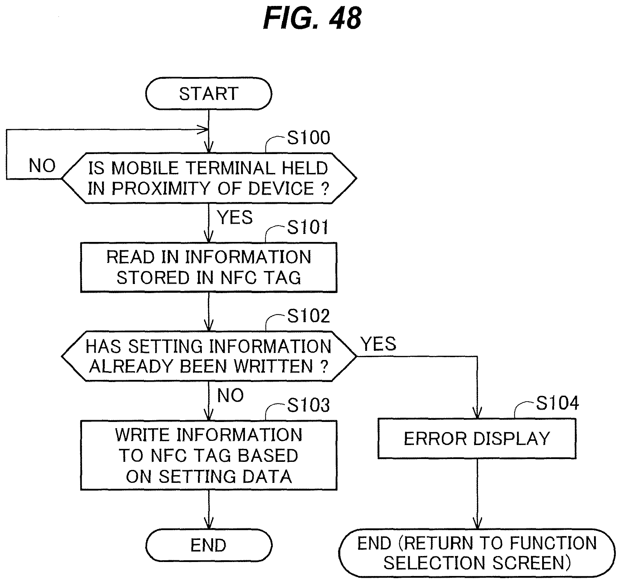

Next, the setting writing process performed following the setting data selection process will be described below with reference to a flowchart illustrated in Fig. 48. Incidentally, this setting writing process is also a process included in the setting writing operation.

Upon starting the setting writing process, the control section 468 of the mobile terminal 450 in step S100 waits for the mobile terminal 450 to be put in proximity of the information processing device 410. In this step, the setting writing screen image Sc3 remains displayed on the touch screen 153 of the mobile terminal 450. When the NFC communication processing section 461 of the mobile terminal 450 becomes able to communicate with the NFC communication section 436 of the information processing device 410, for example, the control section 468 determines that the mobile terminal 450 is put in proximity of the information processing device 410 and proceeds from the step S100 to step S101.

In the step S101, the control section 468 reads in via the NFC communication processing section 461 the information written to the NFC tag 116 of the information processing device 410.

In the next step S102, the control section 468 makes the former tag information analysis section 466 analyze the information read in from the NFC tag 116. In this step, the former tag information analysis section 466 analyzes the information read in from the NFC tag 116 and thereby determines whether or not the changing setting information Rd is included in the information read in from the NFC tag 116 (i.e., whether or not the changing setting information Rd has been written to the NFC tag 116). When the former tag information analysis section 466 determines that no changing setting information Rd has been written to the NFC tag 116, the control section 468 obtains a negative result in the step S102 and proceeds to step S103.

In the step S103, the control section 468 makes the new tag information generation section 467 generate the information to be written to the NFC tag 116 (i.e., information including the changing setting information Rd based on the setting data Dd selected by the user) based on the setting data Dd on the setting writing screen image Sc3 (i.e., the setting data Dd selected by the user), and writes the generated information to the NFC tag 116 via the NFC communication processing section 461. By this step, the changing setting information Rd generated based on the setting data Dd selected by the user is written to the NFC tag 116 as illustrated in Fig. 38B, for example. When the writing to the NFC tag 116 is completed, the control section 468 ends the setting writing process. Incidentally, after ending the setting writing process, it is possible to either return to the function selection screen image Sc1 or end the dedicated application section 462.

In contrast, when the former tag information analysis section 466 determines that the changing setting information Rd has been written to the NFC tag 116, the control section 468 obtains an affirmative result in the step S102 and proceeds to step S104.

In the step S104, the control section 468 controls the display processing section 463 and thereby makes the touch screen 153 of the mobile terminal 450 display an error screen image Sc5 illustrated in Fig. 47B.

In this error screen image Sc5, an error message 66 indicating that changing setting information Rd has already been written to the NFC tag 116, and an OK button 67 are displayed. When a touch operation performed on the OK button 67 on the error screen image Sc5 is recognized via the input processing section 464, the control section 468 ends the setting writing process and controls the display processing section 463 to make the touch screen 153 of the mobile terminal 450 display the function selection screen image Sc1 again. The procedure of the setting writing process is as described above. The description about the operation of the setting writing function (setting writing operation) is as given above.

As mentioned above, in the setting writing function of the dedicated application section 462, when changing setting information Rd has already been written to the NFC tag 116, it is impossible to newly write changing setting information Rd to the NFC tag 116. Therefore, the dedicated application section 462 is configured so that the changing setting information Rd written to the NFC tag 116 can be deleted by using the setting deletion function when changing setting information Rd has already been written to the NFC tag 116. Incidentally, this setting deletion function is used also for deleting changing setting information Rd when the changing setting information Rd was erroneously written to the NFC tag 116, for example.

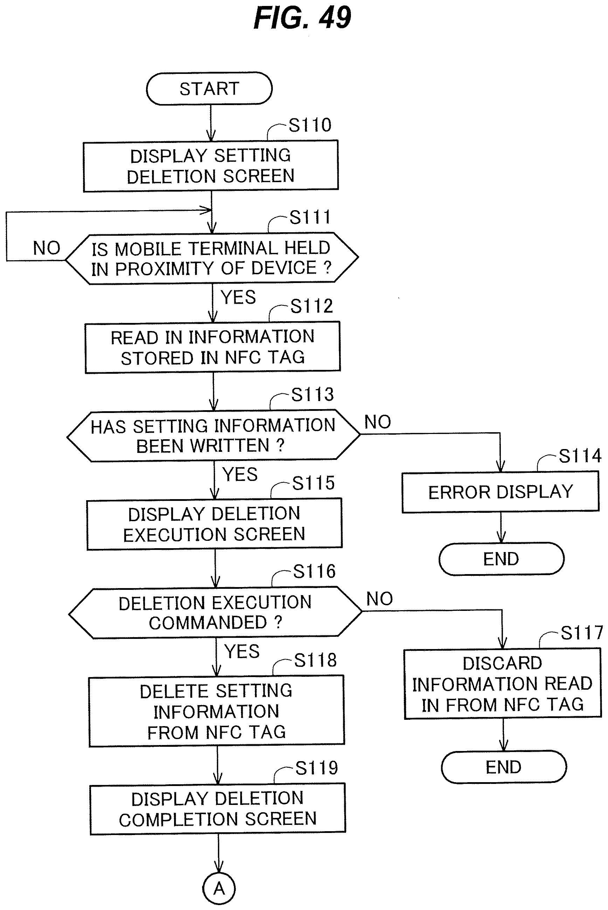

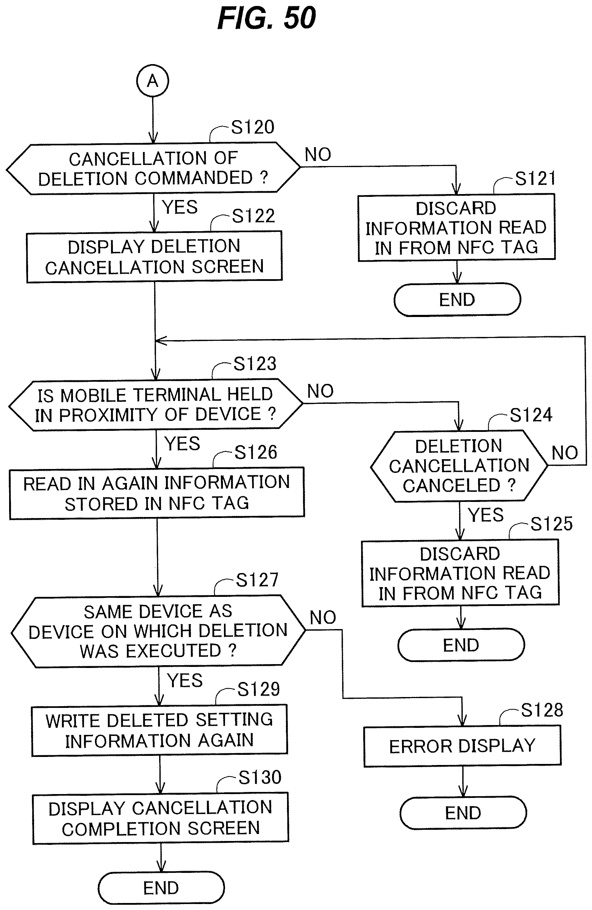

Here, the operation of the setting deletion function (setting deletion operation) will be described. The control section 468 of the dedicated application section 462 starts the setting deletion operation when the setting deletion function is selected on the function selection screen image Sc1 illustrated in Fig. 44. The procedure of the setting deletion operation will be described below with reference to a flowchart illustrated in Figs. 49 and 50. Incidentally, this setting deletion operation is performed by the tag information deletion section 469 of the dedicated application section 462.

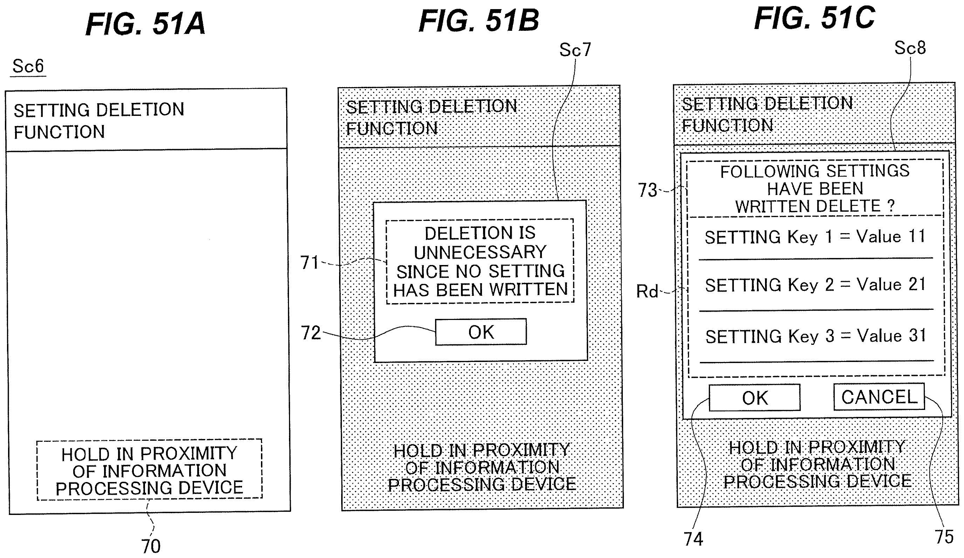

Upon starting the setting deletion operation, the tag information deletion section 469 in step S110 controls the display processing section 463 and thereby makes the touch screen 153 of the mobile terminal 450 display a setting deletion screen image Sc6 illustrated in Fig. 51A. In this setting deletion screen image Sc6, a message 70 prompting the user to put the mobile terminal 450 in proximity of the information processing device 410 is displayed. The user sees the setting deletion screen image Sc6 and puts the mobile terminal 450 in proximity of the information processing device 410.

In the next step S111, the tag information deletion section 469 waits for the mobile terminal 450 to be put in proximity of the information processing device 410. When the NFC communication processing section 461 of the mobile terminal 450 becomes able to communicate with the NFC communication section 436 of the information processing device 410, for example, the tag information deletion section 469 determines that the mobile terminal 450 is put in proximity of the information processing device 410 and proceeds from the step S111 to step S112.

In the step S112, the tag information deletion section 469 reads in via the NFC communication processing section 461 the information written to the NFC tag 116 of the information processing device 410 and stores the information in the storage 157, for example. In the next step S113, the tag information deletion section 469 makes the former tag information analysis section 466 analyze the information read in from the NFC tag 116. In this step, the former tag information analysis section 466 analyzes the information read in from the NFC tag 116 and thereby determines whether or not changing setting information Rd is included in the information read in from the NFC tag 116 (i.e., whether or not changing setting information Rd has been written to the NFC tag 116).

When the former tag information analysis section 466 determines that no changing setting information Rd has been written to the NFC tag 116, the tag information deletion section 469 obtains a negative result in the step S113 and proceeds to step S114.

In the step S114, the tag information deletion section 469 controls the display processing section 463 and thereby makes the touch screen 153 of the mobile terminal 450 display an error screen image Sc7 illustrated in Fig. 51B.

In this error screen image Sc7, an error message 71 indicating that it is impossible to delete changing setting information Rd since no changing setting information Rd has been written to the NFC tag 116, and an OK button 72 are displayed. When a touch operation performed on the OK button 72 on the error screen image Sc7 is recognized via the input processing section 464, the tag information deletion section 469 ends the setting deletion operation and controls the display processing section 463 to make the touch screen 153 of the mobile terminal 450 display the function selection screen image Sc1 again.

In contrast, when the former tag information analysis section 466 determines that the changing setting information Rd has been written to the NFC tag 116, the tag information deletion section 469 obtains an affirmative result in the step S113 and proceeds to step S115.

In the step S115, the tag information deletion section 469 controls the display processing section 463 and thereby makes the touch screen 153 of the mobile terminal 450 display a deletion execution screen image Sc8 illustrated in Fig. 51C.

In this deletion execution screen image Sc8, the contents of the changing setting information Rd written to the NFC tag 116 (setting items and set values), a message 73 asking the user whether the changing setting information Rd may be deleted or not, an OK button 74 for commanding the execution of the deletion, and a cancel button 75 for canceling the deletion are displayed. The user checks the changing setting information Rd written to the NFC tag 116 on the deletion execution screen image Sc8 and commands the execution of the deletion or the cancellation of the deletion.

In the next step S116, the tag information deletion section 469 determines whether or not the execution of the deletion has been commanded on the deletion execution screen image Sc8. When a touch operation performed on the cancel button 75 is recognized via the input processing section 464, the tag information deletion section 469 obtains a negative result in the step S116 and proceeds to step S117.

In the step S117, the tag information deletion section 469 discards the information read in from the NFC tag 116 and stored in the storage 157 without executing the deletion of the changing setting information Rd written to the NFC tag 116, ends the setting deletion operation, and controls the display processing section 463 to make the touch screen 153 of the mobile terminal 450 display the function selection screen image Sc1 again.

In contrast, when a touch operation performed on the OK button 74 is recognized via the input processing section 464, the tag information deletion section 469 obtains an affirmative result in the step S116 and proceeds to step S118.

In the step S118, the tag information deletion section 469 deletes via the NFC communication processing section 461 the changing setting information Rd written to the NFC tag 116. In this step, for example, the tag information deletion section 469 makes the new tag information generation section 467 generate information by replacing the changing setting information Rd included in the information read in from the NFC tag 116 with empty data, and writes the generated information to the NFC tag 116 via the NFC communication processing section 461. This means that the changing setting information Rd written to the NFC tag 116 has been deleted.

Besides this deletion method, the following method may also be used, for example: When the tag information deletion section 469 commands the NFC processing section 435 of the information processing device 410 via the NFC communication processing section 461 to delete the changing setting information Rd written to the NFC tag 116, the NFC tag control section 437 of the NFC processing section 435 deletes the changing setting information Rd written to the NFC tag 116.

Incidentally, the aforementioned operation from the step S112 to the step S118 is assumed to be performed in the state in which the mobile terminal 450 is put in proximity of the information processing device 410. Thus, each time the mobile terminal 450 is separated from the information processing device 410 in the middle of the operation, for example, the tag information deletion section 469 may control the display processing section 463 to make the touch screen 153 of the mobile terminal 450 display a message prompting the user to put the mobile terminal 450 in proximity of the information processing device 410.

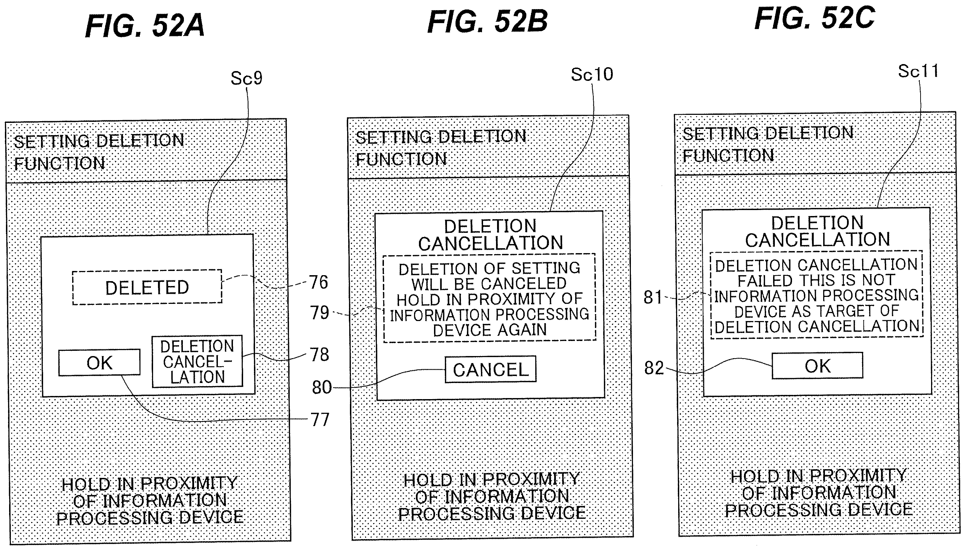

In the next step S119, the tag information deletion section 469 controls the display processing section 463 and thereby makes the touch screen 153 of the mobile terminal 450 display a deletion completion screen image Sc9 illustrated in Fig. 52A. In this deletion completion screen image Sc9, a message 76 indicating that the changing setting information Rd has been deleted from the NFC tag 116, an OK button 77 for ending the setting deletion operation, and a deletion cancellation button 78 for canceling the deletion of the changing setting information Rd are displayed. The user commands on this deletion completion screen image Sc9 whether the deletion of the changing setting information Rd should be canceled or not.

In the next step S120 (Fig. 50), the tag information deletion section 469 determines whether or not the cancellation of the deletion has been commanded on the deletion completion screen image Sc9. When a touch operation performed on the OK button 77 is recognized via the input processing section 464, the tag information deletion section 469 obtains a negative result in the step S120 and proceeds to step S121.

In the step S121, the tag information deletion section 469 discards the information read in from the NFC tag 116 and stored in the storage 157, ends the setting deletion operation, and controls the display processing section 463 to make the touch screen 153 of the mobile terminal 450 display the function selection screen image Sc1 again.

In contrast, when a touch operation performed on the deletion cancellation button 78 is recognized via the input processing section 464, the tag information deletion section 469 obtains an affirmative result in the step S120 and proceeds to step S122.

In the step S122, the tag information deletion section 469 controls the display processing section 463 and thereby makes the touch screen 153 of the mobile terminal 450 display a deletion cancellation screen image Sc10 illustrated in Fig. 52B. In this deletion cancellation screen image Sc10, a message 79 indicating that the deletion will be canceled and prompting the user to put the mobile terminal 450 in proximity of the information processing device 410 again, and a cancel button 80 for canceling the cancellation of the deletion are displayed.

In the next step S123, the tag information deletion section 469 waits for the mobile terminal 450 to be put in proximity of the information processing device 410. Further, while waiting for the mobile terminal 450 to be put in proximity of the information processing device 410, the tag information deletion section 469 in step S124 waits for cancellation of the cancellation of the deletion. When a touch operation performed on the cancel button 80 is recognized via the input processing section 464, the tag information deletion section 469 obtains an affirmative result in the step S124 and proceeds to step S125.

In the step S125, the tag information deletion section 469 discards the information read in from the NFC tag 116 and stored without canceling the deletion, ends the setting deletion operation, and controls the display processing section 463 to make the touch screen 153 of the mobile terminal 450 display the function selection screen image Sc1 again.

In contrast, when the mobile terminal 450 is put in proximity of the information processing device 410 with no touch operation on the cancel button 80, the tag information deletion section 469 proceeds from the step S123 to step S126.

In the step S126, the tag information deletion section 469 reads in again via the NFC communication processing section 461 the information written to the NFC tag 116 of the information processing device 410. In the next step S127, the tag information deletion section 469 makes the former tag information analysis section 466 analyze the information read in from the NFC tag 116.

In this step, the former tag information analysis section 466 determines whether the information processing device 410 of which the mobile terminal 450 was put in proximity when the changing setting information Rd was deleted (i.e., the information processing device 410 when the changing setting information Rd was deleted) and the information processing device 410 of which the mobile terminal 450 is currently put in proximity so as to cancel the deletion of the changing setting information Rd (i.e., the information processing device 410 on which the deletion of the changing setting information Rd is about to be canceled) are the same information processing device 410 or not by comparing the device information Id included in the information read in from the NFC tag 116 and stored in the storage 157 in the step S112 at the time of executing the deletion with the device information Id included in the information read in from the NFC tag 116 in the step S124 at the time of canceling the deletion.

Incidentally, the former tag information analysis section 466 is configured to determine whether the information processing device 410 at the time when the changing setting information Rd was deleted and the current information processing device 410 on which the deletion of the changing setting information Rd is about to be canceled are the same information processing device 410 or not, based on whether or not the device identification information included in the device information Id that has been stored coincides with the device identification information included in the device information Id currently read in from the NFC tag 116.

Here, when the former tag information analysis section 466 determines that the information processing device 410 at the time when the changing setting information Rd was deleted and the current information processing device 410 on which the deletion of the changing setting information Rd is about to be canceled are not the same information processing device 410 since the device identification information included in the device information Id that has been stored does not coincide with the device identification information included in the device information Id currently read in from the NFC tag 116, the tag information deletion section 469 obtains a negative result in the step S127 and proceeds to step S128.

In the step S128, the tag information deletion section 469 does not execute the cancellation of the deletion and controls the display processing section 463 to make the touch screen 153 of the mobile terminal 450 display an error screen image Sell illustrated in Fig. 52C.

In this error screen image Sell, an error message 81 indicating that the cancellation of the deletion cannot be executed since the information processing device 410 of which the mobile terminal 450 is currently put in proximity is not the information processing device 410 at the time when the changing setting information Rd was deleted, and an OK button 82 are displayed.

When a touch operation performed on the OK button 82 on the error screen image Sell is recognized via the input processing section 464, the tag information deletion section 469 ends the setting deletion operation and controls the display processing section 463 to make the touch screen 153 of the mobile terminal 450 display the function selection screen image Sc1 again. As above, in the setting deletion operation, the cancellation of the deletion cannot be executed on an information processing device 410 different from the information processing device 410 from which the changing setting information Rd was deleted. Incidentally, after the step S125, it is also possible, instead of ending the setting deletion operation, to return to the step S122 and prompt the user to put the mobile terminal 450 in proximity of a different information processing device 410.

In contrast, when the former tag information analysis section 466 determines that the information processing device 410 at the time when the changing setting information Rd was deleted and the current information processing device 410 on which the deletion of the changing setting information Rd is about to be canceled are the same information processing device 410 since the device identification information included in the device information Id that has been stored coincides with the device identification information included in the device information Id currently read in from the NFC tag 116, the tag information deletion section 469 obtains an affirmative result in the step S127 and proceeds to step S129.

In the step S129, the tag information deletion section 469 returns (writes) the information read in from the NFC tag 116 and stored in the storage 157 to the NFC tag 116 via the NFC communication processing section 461. In this step, the changing setting information Rd deleted from the NFC tag 116 is written to the NFC tag 116 again, which means that the deletion of the changing setting information Rd has been canceled.

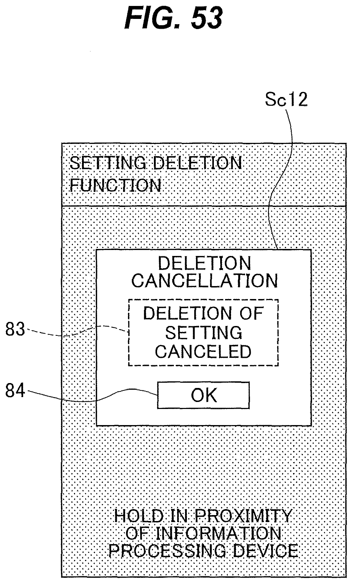

In the next step S130, the tag information deletion section 469 controls the display processing section 463 and thereby makes the touch screen 153 of the mobile terminal 450 display a deletion cancellation completion screen image Sc12 illustrated in Fig. 53.

In this deletion cancellation completion screen image Sc12, a message 83 indicating that the deletion cancellation of the changing setting information Rd has been completed, and an OK button 84 are displayed. When a touch operation performed on the OK button 84 on the deletion cancellation completion screen image Sc12 is recognized via the input processing section 464, the tag information deletion section 469 ends the setting deletion operation and controls the display processing section 463 to make the touch screen 153 of the mobile terminal 450 display the function selection screen image Sc1 again. The description about the setting deletion operation is as given above.

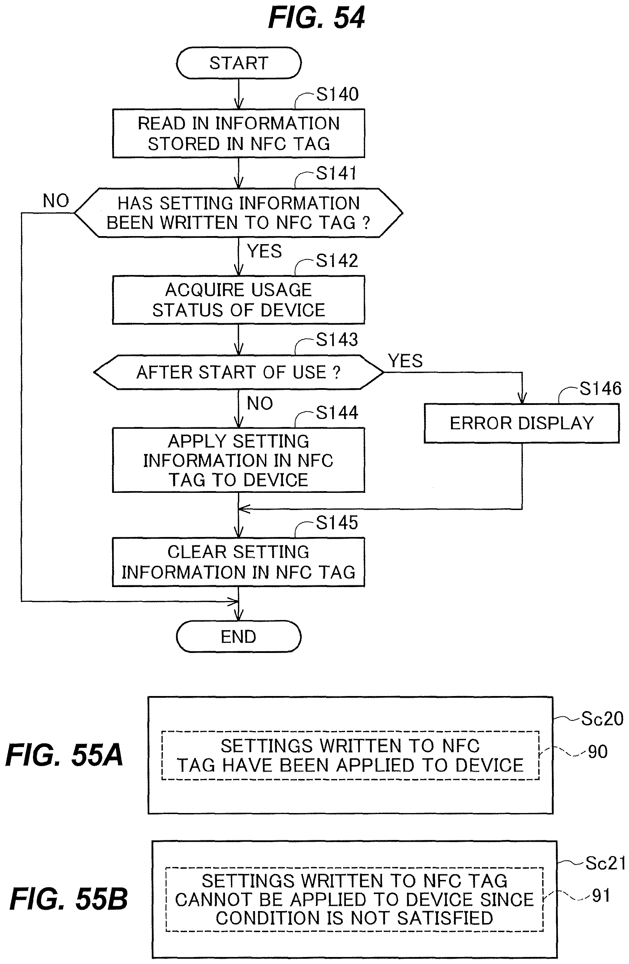

Next, the operation on the information processing device 410's side will be described below with reference to a flowchart illustrated in Fig. 54. Incidentally, the operation on the information processing device 410's side illustrated in Fig. 54 is an operation performed when the power of the information processing device 410 is turned on (i.e., upon startup).

When the power of the information processing device 410 is turned on, in step S140, the initialization processing section 430 of the information processing device 410 reads in via the NFC tag control section 437 the information written to the NFC tag 116 and provides the information to the tag information analysis section 433.

In the next step S141, the tag information analysis section 433 analyzes the information read in from the NFC tag 116 and thereby determines whether or not the changing setting information Rd is included in the information read in from the NFC tag 116 (i.e., whether or not the changing setting information Rd has been written to the NFC tag 116). When the tag information analysis section 433 determines that no changing setting information Rd has been written to the NFC tag 116, the control section 438 obtains a negative result in the step S141 and ends the operation on the information processing device 410's side.

In contrast, when the tag information analysis section 433 determines that the changing setting information Rd has been written to the NFC tag 116, the control section 438 obtains an affirmative result in the step S141 and proceeds to step S142. In the step S142, the control section 438 acquires the usage status information 122 indicating the usage status of the information processing device 410 from the usage status management section 434.

In the next step S143, the control section 438 determines whether or not the usage status of the information processing device 410 indicated by the usage status information 122 is "after the start of use".

When the usage status indicated by the usage status information 122 is "before the start of use", the control section 438 obtains a negative result in the step S143 and proceeds to step S144.

In the step S144, the control section 438 makes the device setting management section 432 change the device setting information 121 by using the changing setting information Rd acquired by the tag information analysis section 433 (i.e., the changing setting information Rd written to the NFC tag 116) and the mapping information Md stored in the storage 120.

Specifically, the device setting management section 432 associates each of the setting items (e.g., SETTING Key 1) described in the changing setting information Rd illustrated in Fig. 38B, for example, with each of the setting items (e.g., DEVICE SETTING 1) described in the device setting information 121 illustrated in Fig. 40A by using the mapping information Md illustrated in Fig. 41, and changes the set values of the setting items described in the device setting information 121 by using the set values of the setting items described in the changing setting information Rd.

This means that the set values of the setting items described in the changing setting information Rd in the NFC tag 116 have been applied to the information processing device 410. In this case, the control section 438 controls the display processing section 431 and thereby makes the display 114 of the information processing device 410 display a setting change completion screen image Sc20 illustrated in Fig. 55A. In this setting change completion screen image Sc20, a message 90 indicating that the set values of the setting items described in the changing setting information Rd in the NFC tag 116 have been applied to the information processing device 410 is displayed.

In the next step S145, the control section 438 clears (deletes) via the NFC tag control section 437 the changing setting information Rd written to the NFC tag 116 and ends the operation on the information processing device 410's side. In this case, the control section 438 is supposed to delete the changing setting information Rd written to the NFC tag 116.

In contrast, when the usage status indicated by the usage status information 122 is "after the start of use", the control section 438 obtains an affirmative result in the step S143 and proceeds to step S146.

In the step S146, the control section 438 controls the display processing section 431 and thereby makes the display 114 of the information processing device 410 display an error screen image Sc21 illustrated in Fig. 55B, and thereafter proceeds to the step S145. In this error screen image Sc21, an error message 91 indicating that the set values of the setting items described in the changing setting information Rd in the NFC tag 116 cannot be applied to the information processing device 410 since a condition (changing condition illustrated in Fig. 42) is not satisfied is displayed. The description about the operation on the information processing device 410's side is as given above.

As described so far, the mobile terminal 450 of the information processing system 400 receives a command from the user, and when the received command is a writing command for writing changing setting information Rd to the NFC tag 116 installed in the information processing device 410 (i.e., an operation of selecting the selection item 50 of the setting writing function on the function selection screen image Sc1 and thereafter selecting setting data Dd on the setting data selection screen image Sc2 and putting the mobile terminal 450 in proximity of the information processing device 410) and changing setting information Rd (already-written setting information) has been stored in the NFC tag 116, the control section 468 makes the touch screen 153 display the error screen image Sc5 as a first notification to the user.

In the mobile terminal 450, when the received command is the writing command for writing changing setting information Rd to the NFC tag 116 and no changing setting information Rd (already-written setting information) has been stored in the NFC tag 116, the control section 468 writes the changing setting information Rd to the NFC tag 116.

Further, in the mobile terminal 450, when the received command is a deletion command for deleting changing setting information Rd from the NFC tag 116 (i.e., an operation of selecting the selection item 51 of the setting deletion function on the function selection screen image Sc1 and putting the mobile terminal 450 in proximity of the information processing device 410) and changing setting information Rd (already-written setting information) has been stored in the NFC tag 116, the tag information deletion section 469 deletes the changing setting information Rd (already-written setting information) from the NFC tag 116.

Furthermore, in the mobile terminal 450, when the received command is the deletion command for deleting changing setting information Rd (already-written setting information) from the NFC tag 116 and no changing setting information Rd (already-written setting information) has been stored in the NFC tag 116, the tag information deletion section 469 makes the touch screen 153 display the error screen image Sc7 as a second notification to the user.

As above, in the information processing system 400, the mobile terminal 450 can delete the changing setting information Rd (already-written setting information already written to the NFC tag 116 of the information processing device 410 in the power-off state. Therefore, the changing setting information Rd written to the NFC tag 116 (already-written setting information) can be rewritten by a series of simple operation: the writing of the changing setting information Rd to the NFC tag 116, the deletion of the changing setting information Rd (already-written setting information) and the writing of new changing setting information Rd by the mobile terminal 450. Accordingly, with the information processing system 400, the working efficiency can be increased compared to conventional systems.

Further, in the mobile terminal 450, when the received command is the deletion command for deleting changing setting information Rd (already-written setting information) from the NFC tag 116 and changing setting information Rd (already-written setting information) has been stored in the NFC tag 116, the tag information deletion section 469 makes the deletion execution screen image Sc8 display the contents of the changing setting information Rd (already-written setting information) read in from the NFC tag 116, and asks the user on the deletion execution screen image Sc8 whether the changing setting information Rd stored in the NFC tag 116 (already-written setting information) may be deleted or not. If the user commands that the information may be deleted (when the touch operation is performed on the OK button 74), the tag information deletion section 469 deletes the changing setting information Rd (already-written setting information) from the NFC tag 116. This allows the user to check the contents of the changing setting information Rd written to the NFC tag 116 (already-written setting information) and then command whether the changing setting information Rd written to the NFC tag 116 of the information processing device 410 (already-written setting information) should be deleted or not.

Further, when the changing setting information Rd written to the NFC tag 116 (already-written setting information) is deleted, the mobile terminal 450 reads in the changing setting information Rd and the device information Id from the NFC tag 116 and stores these items of information for later use, and when the deletion cancellation command for canceling the deletion of the changing setting information Rd (the operation of touching the deletion cancellation button 78 on the deletion completion screen image Sc9 and putting the mobile terminal 450 in proximity of the information processing device 410) is received after the deletion of the changing setting information Rd from the NFC tag 116, the mobile terminal 450 compares the device identification information included in the device information Id read in from the NFC tag 116 at that time with the device identification information included in the stored device information Id. If the two pieces of device identification information coincide with each other, the mobile terminal 450 cancels the deletion by writing the stored changing setting information Rd back to the NFC tag 116.

Accordingly, in the information processing system 400, even when the changing setting information Rd has been erroneously deleted from the NFC tag 116 of the information processing device 410, the deletion can be canceled easily and reliably by writing the deleted changing setting information Rd back to the NFC tag 116 of the information processing device 410.

### Fifth Embodiment

Next, a fifth embodiment will be described below. This fifth embodiment is an embodiment obtained by adding an overwriting function of overwriting the changing setting information Rd to the NFC tag 116 to the fourth embodiment. Therefore, this overwriting function will be mainly described here.

As illustrated in Fig. 34, an information processing system 500 in the firth embodiment includes the information processing device 410 and a mobile terminal 550.

The information processing device 410 of the information processing system 500 in the fifth embodiment is the same as the information processing device 410 of the information processing system 400 in the fourth embodiment.

The mobile terminal 550 includes the CPU 151, the RAM 152, the touch screen 153, the NFC unit 154 and the storage 157.

The mobile terminal 550 in the fifth embodiment differs from the mobile terminal 150 in the first embodiment in the processing performed by the CPU 151.

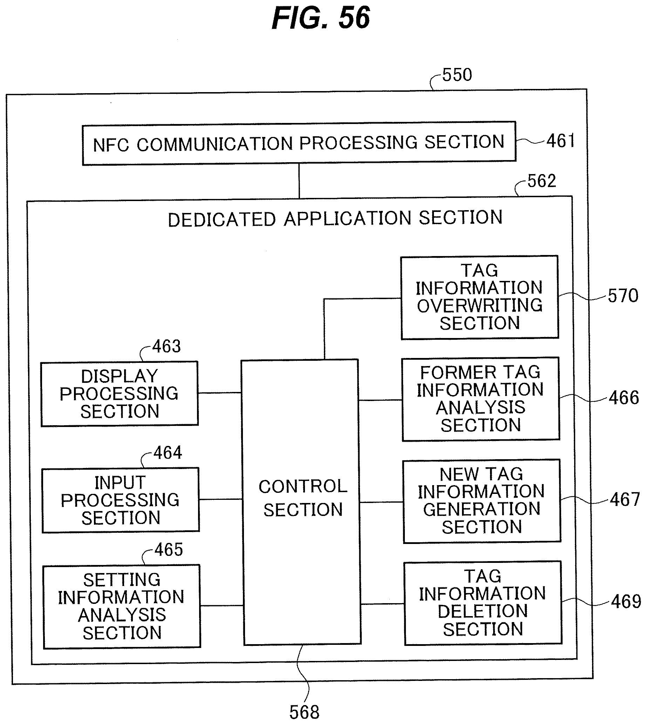

Fig. 56 is a block diagram schematically illustrating the software configuration of the mobile terminal 550 in the fifth embodiment.

As software components, the mobile terminal 550 includes the NFC communication processing section 461 implemented by the LSI 156 executing firmware and a dedicated application section 562 implemented by the CPU 151 executing a device setting application.

The NFC communication processing section 461 of the mobile terminal 550 in the fifth embodiment is the same as the NFC communication processing section 461 of the mobile terminal 450 in the fourth embodiment.

The dedicated application section 562 includes the display processing section 463, the input processing section 464, the setting information analysis section 465, the former tag information analysis section 466, the new tag information generation section 467, a control section 568, the tag information deletion section 469 and a tag information overwriting section 570.

The display processing section 463, the input processing section 464, the setting information analysis section 465, the former tag information analysis section 466, the new tag information generation section 467 and the tag information deletion section 469 of the dedicated application section 562 in the fifth embodiment are the same as the display processing section 463, the input processing section 464, the setting information analysis section 465, the former tag information analysis section 466, the new tag information generation section 467 and the tag information deletion section 469 of the dedicated application section 462 in the fourth embodiment.

The tag information overwriting section 570 overwrites the changing setting information Rd written to the NFC tag 116.

The control section 568 controls the operation of the display processing section 463, the input processing section 464, the setting information analysis section 465, the former tag information analysis section 466, the new tag information generation section 467, the tag information deletion section 469 and the tag information overwriting section 570.

The mobile terminal 550 provides the user with the function of overwriting the changing setting information Rd to the NFC tag 116 of the information processing device 410 by use of the tag information overwriting section 570 of the dedicated application section 562.

Next, the operation on the mobile terminal 550's side will be described below. Incidentally, the rough scheme of the operation on the mobile terminal 550's side is the same as that in the fourth embodiment, and thus repeated description thereof is omitted.

In the operation on the mobile terminal 550's side, the difference from that in the fourth embodiment is that when changing setting information Rd has already been written to the NFC tag 116 in the setting writing process (Fig. 48), instead of displaying the error screen image Sc5 and ending the setting writing process, the mobile terminal 550 lets the user select whether to end the setting writing process, delete the changing setting information Rd written to the NFC tag 116, or overwrite the changing setting information Rd. Therefore, this point (difference from the fourth embodiment) will be mainly described here.

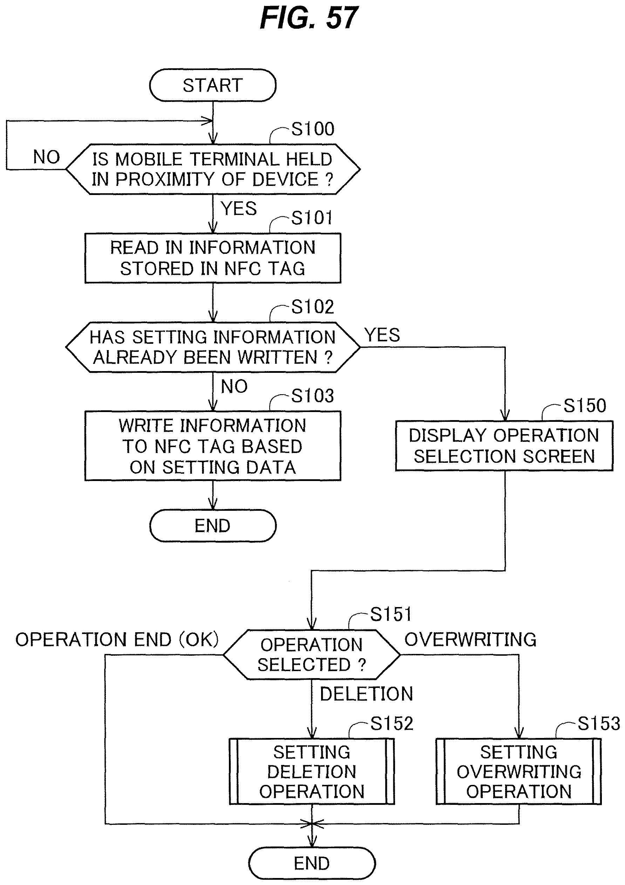

First, the setting writing process executed on the mobile terminal 550's side will be described with reference to a flowchart illustrated in Fig. 57. Incidentally, the steps S100 to S103 illustrated in Fig. 57 are the same as those in the setting writing process (Fig. 48) described in the fourth embodiment, and thus repeated description thereof is omitted. Therefore, the description here will be given of steps S150 to S153 to which the process proceeds when the affirmative result is obtained in the step S102.

When the former tag information analysis section 466 determines that changing setting information Rd has been written to the NFC tag 116 (i.e., when changing setting information Rd has already been written to the NFC tag 116 even though the changing setting information Rd based on the setting data Dd selected by the user is going to be written to the NFC tag 116), the control section 568 of the dedicated application section 562 obtains the affirmative result in the step S102 and proceeds to the step S150.

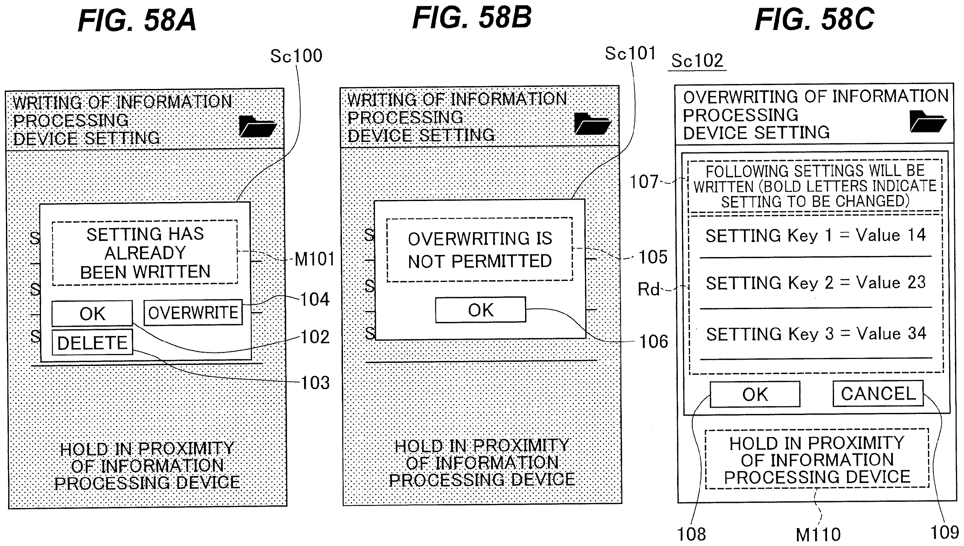

In the step S150, the control section 568 controls the display processing section 463 and thereby makes the touch screen 153 of the mobile terminal 550 display an operation selection screen image Sc100 illustrated in Fig. 58A.

In this operation selection screen image Sc100, a message M101 indicating that changing setting information Rd has been written to the NFC tag 116, an OK button 102 for ending the setting writing process, a deletion button 103 for deleting the changing setting information Rd written to the NFC tag 116, and an overwriting button 104 for overwriting the changing setting information Rd written to the NFC tag 116 are displayed. Namely, this operation selection screen image Sc100 functions as a deletion screen image for deleting the changing setting information Rd written to the NFC tag 116 and an overwriting screen image for overwriting the changing setting information Rd written to the NFC tag 116.

Here, when a touch operation performed on the OK button 102 on the operation selection screen image Sc100 is recognized via the input processing section 464, the control section 568 ends the setting writing process and controls the display processing section 463 to make the touch screen 153 of the mobile terminal 550 display the function selection screen image Sc1 again. When a touch operation performed on the deletion button 103 on the operation selection screen image Sc100 is recognized via the input processing section 464, the control section 568 proceeds from step S151 to step S152 and performs the setting deletion operation of deleting the changing setting information Rd written to the NFC tag 116.

This setting deletion operation is, for example, the operation from the step S115 in the setting deletion operation illustrated in Fig. 49 and Fig. 50, and thus repeated description thereof is omitted here. As above, in the mobile terminal 550, if changing setting information Rd has already been written to the NFC tag 116 when changing setting information Rd is going to be written to the NFC tag 116, the setting deletion function can be activated immediately without the need of returning to the function selection screen image Sc1 illustrated in Fig. 44.

Further, when a touch operation performed on the overwriting button 104 on the operation selection screen image Sc100 is recognized via the input processing section 464, the control section 568 proceeds from the step S151 to the step S153 and performs a setting overwriting operation of overwriting the changing setting information Rd written to the NFC tag 116.

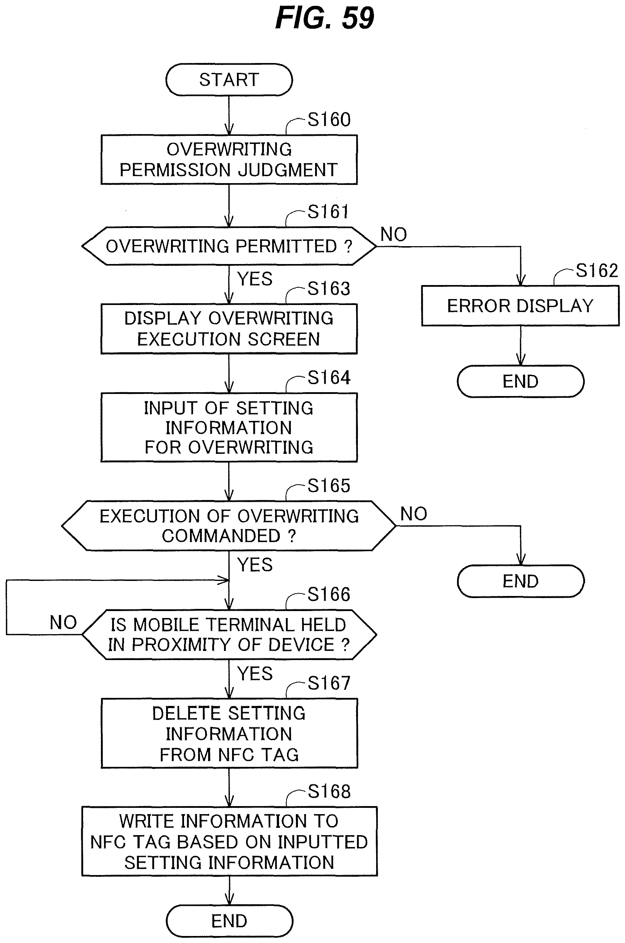

Here, the setting overwriting operation will be described with reference to a flowchart illustrated in Fig. 59. Upon starting the setting overwriting operation, in step S160, the tag information overwriting section 570 of the dedicated application section 562 makes an overwriting permission determination on whether the overwriting should be permitted or not. This overwriting permission determination is made for the purpose of preventing erroneous overwriting of the changing setting information Rd in the NFC tag 116 due to an erroneous operation or the like.

Specifically, the tag information overwriting section 570 makes the overwriting permission determination by using one of the following four methods, for example. As a first method, the overwriting is permitted only when the mobile terminal 550 that is going to perform the overwriting is a mobile terminal 550 that wrote changing setting information Rd to the NFC tag 116 before. In this case, it is possible, for example, to write terminal identification information of the mobile terminal 550 to the NFC tag 116 together with the changing setting information Rd and permit the overwriting only when the terminal identification information already written to the NFC tag 116 coincides with the terminal identification information of the mobile terminal 550 that is going to perform the overwriting.

As a second method, a device setting application for implementing the dedicated application section 562 is prepared in an overwritable version and a non-overwritable version, and the overwriting is permitted only for a mobile terminal 550 in which the device setting application in the overwritable version has been installed.

As a third method, an overwriting password for the overwriting is registered on the device setting application, and the overwriting is permitted only when the correct overwriting password is inputted to the mobile terminal 550 at the time of the overwriting operation.

As a fourth method, an overwriting password is written to the NFC tag 116 together with the changing setting information Rd, and the overwriting is permitted only when an overwriting password inputted by the user to the mobile terminal 550 at the time of the overwriting operation coincides with the overwriting password already written to the NFC tag. Incidentally, the overwriting permission determination may also be made by a method different from these methods.

In the next step S161, the tag information overwriting section 570 determines whether or not the overwriting is permitted as the result of the overwriting permission determination. When the overwriting is not permitted, the tag information overwriting section 570 obtains a negative result in the step S161 and proceeds to step S162. In the step S162, the tag information overwriting section 570 controls the display processing section 463 and thereby makes the touch screen 153 of the mobile terminal 550 display an error screen image Sc101 illustrated in Fig. 58B. In this error screen image Sc101, an error message 105 indicating that the overwriting is not permitted, and an OK button 106 are displayed. When a touch operation performed on the OK button 106 on the error screen image Sc101 is recognized via the input processing section 464, the tag information overwriting section 570 ends the setting overwriting operation and controls the display processing section 463 to make the touch screen 153 of the mobile terminal 550 display the function selection screen image Sc1 again. Incidentally, in this case, it is also possible to return to the operation selection screen image Sc100 instead of returning to the function selection screen image Sc1.

In contrast, when the overwriting is permitted, the tag information overwriting section 570 obtains an affirmative result in the step S161 and proceeds to step S163. In the step S163, the tag information overwriting section 570 controls the display processing section 463 and thereby makes the touch screen 153 of the mobile terminal 550 display an overwriting execution screen image Sc102 illustrated in Fig. 58C. In this overwriting execution screen image Sc102, the contents of the changing setting information Rd (setting items and set values) to be overwritten to the NFC tag 116, a message 107 indicating that the overwriting will be executed by using the displayed contents of the changing setting information Rd, an OK button 108 for commanding the execution of the overwriting, a cancel button 109 for canceling the execution of the overwriting, and a message M110 prompting the user to put the mobile terminal 550 in proximity of the information processing device 410 are displayed.

In this overwriting execution screen image Sc102, for example, the contents of the changing setting information Rd read in from the NFC tag 116 (i.e., the changing setting information Rd written to the NFC tag 116) are displayed as default and the displayed changing setting information Rd can be changed by the user by performing a touch operation. Specifically, the user can change the set value of each setting item displayed as the changing setting information Rd. Further, in this overwriting execution screen image Sc102, when a set value is changed by the user, the changed set value and its setting item are displayed in an emphasis display (e.g., bold line display). Incidentally, on this overwriting execution screen image Sc102, it is also possible to change only a set value of a setting item or set values of some setting items among a plurality of setting items included in the changing setting information Rd as illustrated in Fig. 58C. The user checks the changing setting information Rd already written to the NFC tag 116 on the overwriting execution screen image Sc102 and then inputs the changing setting information Rd to be used for the overwriting (S164).

Incidentally, although not illustrated, in the overwriting execution screen image Sc102, the setting data Dd selected by the user in the step S92 as a previous stage (i.e., the setting data Dd that the user was going to write to the NFC tag 116 this time) may also be displayed as default. In this case, on the overwriting execution screen image Sc102, among the set values included in the setting data Dd selected by the user, each set value different from the set value included in the changing setting information Rd already written to the NFC tag 116, and its setting item are displayed in the emphasis display. With this method, the operation of changing set values on the overwriting execution screen image Sc102 can be omitted and it is possible to let the user check whether or not the contents of the setting data Dd that the user was going to write to the NFC tag 116 this time and the contents of the changing setting information Rd already written to the NFC tag 116 coincide with each other.

In the next step S165, the tag information overwriting section 570 determines whether or not the execution of the overwriting has been commanded on the overwriting execution screen image Sc102. When a touch operation performed on the Cancel button 109 is recognized via the input processing section 464, the tag information overwriting section 570 obtains a negative result in the step S165, ends the setting overwriting operation, and controls the display processing section 463 to make the touch screen 153 of the mobile terminal 550 display the function selection screen image Sc1 again. Incidentally, also in this case, it is also possible to return to the operation selection screen image Sc100 instead of returning to the function selection screen image Sc1.

In contrast, when a touch operation performed on the OK button 108 is recognized via the input processing section 464, the tag information overwriting section 570 obtains an affirmative result in the step S165 and proceeds to step S166. In the step S166, the tag information overwriting section 570 waits for the mobile terminal 550 to be put in proximity of the information processing device 410 and proceeds to step S167 when the mobile terminal 550 is put in proximity of the information processing device 410.

In the step S167, the tag information overwriting section 570 deletes via the NFC communication processing section 461 the changing setting information Rd written to the NFC tag 116 in order to execute the overwriting of the changing setting information Rd. In the next step S168, the tag information overwriting section 570 makes the new tag information generation section 467 generate the information to be written to the NFC tag 116 (i.e., information including the changing setting information Rd displayed on the overwriting execution screen image Sc102) based on the contents of the changing setting information Rd for the overwriting (setting items and set values), which are displayed on the overwriting execution screen image Sc102, and writes the generated information to the NFC tag 116 via the NFC communication processing section 461. This means that the changing setting information Rd inputted on the overwriting execution screen image Sc102 has been overwritten to the NFC tag 116. When the overwriting is completed as above, the tag information overwriting section 570 ends the setting overwriting operation. Incidentally, after ending the setting overwriting operation, it is possible to either return to the function selection screen image Sc1 or end the dedicated application section 562. The description about the setting overwriting operation is as given above.

As described so far, in the mobile terminal 550 in the fifth embodiment, when the received command is the writing command for writing changing setting information Rd to the NFC tag 116 and changing setting information Rd (already-written setting information) has been stored in the NFC tag 116, the control section 568 displays, as a first notification to the user, the operation selection screen image Sc100 functioning as the deletion screen image for receiving the deletion command for deleting the changing setting information Rd (already-written setting information) from the NFC tag 116 and the overwriting screen image for receiving the command for overwriting the changing setting information Rd to the NFC tag 116. Then, in the mobile terminal 550, when the deletion command is received via the operation selection screen image Sc100 (when a touch operation is performed on the deletion button 103), the tag information deletion section 469 deletes the changing setting information Rd (already-written setting information) from the NFC tag 116. In contrast, when the overwriting command is received via the operation selection screen image Sc100 (when a touch operation is performed on the overwriting button 104), the tag information overwriting section 570 deletes the changing setting information Rd (already-written setting information) written to the NFC tag 116 and then writes the new changing setting information Rd selected by the user to the NFC tag 116.

As above, in the fifth embodiment, the changing setting information Rd (already-written setting information) stored in the NFC tag 116 of the information processing device 410 in the power-off state can be overwritten (i.e., rewritten) without the need of making the user perform the operation on the mobile terminal 550 for deleting the changing setting information Rd (already-written setting information), and thus the changing setting information Rd (already-written setting information) stored in the NFC tag 116 can be rewritten with ease. Thus, the fifth embodiment can be considered to be able to further increase the working efficiency compared to the fourth embodiment.

Further, in the fifth embodiment, when changing setting information Rd (already-written setting information) has been stored in the NFC tag 116 at the time of the writing work of writing changing setting information Rd to the NFC tag, it is possible to immediately proceed to the deletion work of deleting the changing setting information Rd (already-written setting information) stored in the NFC tag 116 or to the overwriting work via the operation selection screen image Sc100. Also, in this regard, the fifth embodiment can be considered to be able to still further increase the working efficiency compared to the fourth embodiment.

Furthermore, in the fifth embodiment, a condition for permitting the overwriting of the changing setting information Rd (already-written setting information) has been set to the mobile terminal 550, by which erroneous overwriting of the changing setting information Rd (already-written setting information) stored in the NFC tag 116 due to an erroneous operation or the like can be prevented.

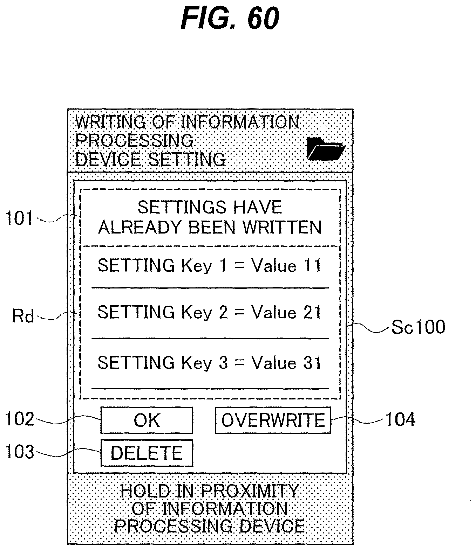

Incidentally, in the fifth embodiment described above, when changing setting information Rd (already-written setting information) has been stored in the NFC tag 116 in the setting writing process, the operation selection screen image Sc100 illustrated in Fig. 58A is displayed on the touch screen 153 of the mobile terminal 550. In this case, it is also possible, for example, to display the contents of the changing setting information Rd read in from the NFC tag 116 (i.e., the changing setting information Rd that has currently been written to the NFC tag 116) on the operation selection screen image Sc100 as illustrated in Fig. 60. This allows the user to check the contents of the changing setting information Rd (already-written setting information) currently stored in the NFC tag 116 on the operation selection screen image Sc100 and thereafter select the next operation. Also, in the fourth embodiment, it is also possible in the setting writing process to similarly display the contents of the changing setting information Rd (already-written setting information) currently stored in the NFC tag 116 on the error screen image Sc5 that is displayed when changing setting information Rd (already-written setting information) has been stored in the NFC tag 116. Further, while the deletion button 103 for receiving the deletion command for deleting the changing setting information Rd from the NFC tag 116 and the overwriting button 104 for receiving the overwriting command are displayed in the operation selection screen image Sc100, the configuration of the operation selection screen image Sc100 is not limited to this example. It is also possible for only one of the deletion button 103 and the overwriting button 104 to be display, for example.

Further, in the fifth embodiment described above, if changing setting information Rd (already-written setting information) has been stored in the NFC tag 116 when changing setting information Rd is going to be written to the NFC tag 116 by the setting writing operation, the setting overwriting operation first deletes the changing setting information Rd (already-written setting information) stored in the NFC tag 116 and then writes the new changing setting information Rd to the NFC tag 116. However, the operation is not limited to this example: it is also possible, for example, to add a selection item for selecting the setting overwriting function to the function selection screen image Sc1 and upon the selection of this selection item, start the setting writing operation and overwrite the changing setting information Rd to the NFC tag 116. In this case, it is possible to presume a situation in which the user commands the overwriting of changing setting information Rd to the NFC tag 116 even though no changing setting information Rd has been stored in the NFC tag 116 of the information processing device 410. Therefore, when the command for overwriting changing setting information Rd to the NFC tag 116 is received, the tag information overwriting section 570 determines whether changing setting information Rd (already-written setting information) has been stored in the NFC tag 116 or not, and if no changing setting information Rd has been stored, displays a message indicating that the next operation will be not the overwriting but simple writing, for example, on the touch screen 153, and then writes the changing setting information Rd to the NFC tag 116.

In the fourth embodiment described earlier, as illustrated in the flowchart of Figs. 49 and 50, immediately after the deletion of the changing setting information Rd (already-written setting information) from the NFC tag 116, the deletion of the changing setting information Rd (already-written setting information) can be canceled according to a command from the user. However, it is also possible for the tag information deletion section 469 to store and hold the changing setting information Rd (already-written setting information) deleted from the NFC tag 116 and the device information Id read in from the NFC tag 116 in the storage 157 of the mobile terminal 450, and upon receiving the user's command for canceling the previous deletion at the next startup of the dedicated application section 462, perform the deletion cancellation on the same information processing device 410 as the information processing device 410 from which the changing setting information Rd (already-written setting information) was deleted.

Further, the fourth embodiment described earlier was configured so that the information reading/writing from/to the NFC tag 116 installed in the information processing device 410 as a concrete example of the second device is performed from the side of the mobile terminal 450 as a concrete example of the first device by use of NFC. However, the method of the information reading/writing is not limited to this example; as long as RFID is used, it is also possible to perform the information reading/writing on an RFID tag installed in the second device from the first device's side by use of a short-range wireless communication standard other than NFC. The same goes for the fifth embodiment.

While each embodiment described above was applied to the information processing system 400 formed with the mobile terminal 450 as a concrete example of the first device and the information processing device 410 as a concrete example of the second device, the application of each embodiment is not limited to this example; each embodiment may be applied to a system having a configuration different from the information processing system 400 as long as the information control (reading, writing and deletion of information) can be performed on an RFID tag installed in the second device from the first device in the system. For example, it is possible to apply each embodiment to a system in which the RFID tag is installed in a toner cartridge or an image formation unit used as a replacement part of a printer and the reading and writing of information regarding the status of use of toners or the image formation unit are performed on the RFID tag installed in the toner cartridge or the image formation unit as the second device from a mobile terminal (or the printer) used as the first device. Further, device identification information capable of identifying the second device and information other than the setting information on the second device may be written to the RFID tag. Furthermore, while each embodiment described above was applied to the mobile terminal 450 as a concrete example of the first device and an information processing device, the application of each embodiment is not limited to this example; each embodiment may be applied to a device having a configuration different from the mobile terminal 450 as long as the device is capable of performing the information control on the RFID tag installed in the second device.

Further, while the mobile terminal 450 as the first device is provided with the NFC communication processing section 461 as a concrete example of an RFID communication section for performing communication with the RFID tag in each embodiment described above, the RFID communication section is not limited to this example; it is permissible if an RFID communication section appropriate for the type of the RFID tag as the peer of the communication is provided. In the fourth embodiment described earlier, when the command received from the user is the writing command for writing changing setting information Rd to the NFC tag 116 and changing setting information Rd (already-written setting information) has been stored in the NFC tag 116, the control section 468 of the mobile terminal 450 makes the touch screen 153 display the error screen image Sc5 as the first notification to the user. However, the first notification is not limited to this example; it is also possible, for example, to make the mobile terminal 450 display information indicating that changing setting information Rd has been stored, output sound or voice indicating that changing setting information Rd has been stored, or the like, as the first notification. Further, in the fourth embodiment described earlier, when the command received from the user is the deletion command for deleting changing setting information Rd from the NFC tag 116 and no changing setting information Rd (already-written setting information) has been stored in the NFC tag 116, the tag information deletion section 469 of the mobile terminal 450 makes the touch screen 153 display the error screen image Sc7 as the second notification to the user. However, the second notification is not limited to this example; it is also possible, for example, to make the mobile terminal 450 display information indicating that no changing setting information Rd has been stored, output sound or voice indicating that no changing setting information Rd has been stored, or the like, as the second notification.

Moreover, embodiments are not limited to the embodiments described above. Namely, the scope of application of the embodiments ranges also to embodiments made by arbitrarily combining some or all of the above-described first to fifth embodiments and embodiments made by extracting parts of some of the first to fifth embodiments, as long as they fall under the scope of the appended claims.

The embodiments are widely usable for a variety of systems that perform the information control on an RFID tag, for example.

### DESCRIPTION OF REFERENCE CHARACTERS

100, 200, 300, 400, 500: information processing system, 110, 210, 310, 410: information processing device, 111: CPU, 112: ROM, 113: RAM, 114: display, 115, 415: NFC unit, 116: NFC tag, 117: antenna, 118: LSI, 119: host controller, 120: storage, 130, 230, 430: initialization processing section, 131, 431: display processing section, 132, 432: device setting management section, 133, 433: tag information analysis section, 134, 434: usage status management section, 135, 435: NFC processing section, 136, 436: NFC communication section, 137, 437: NFC tag control section, 138, 238, 338, 438: control section, 139: detection section, 140, 240, 340: information setting section, 141: information deletion section, 242: authentication section, 150, 250, 450, 550: mobile terminal, 151: CPU, 152: RAM, 153: touch screen, 154: NFC unit, 155: antenna, 156: LSI, 157: storage, 161, 461: NFC communication processing section, 162, 262, 462, 562: dedicated application section, 163, 463: display processing section, 164, 464: input processing section, 165, 265, 465: setting information analysis section, 166, 466: former tag information analysis section, 167, 467: new tag information generation section, 168, 268, 468, 568: control section, 469: tag information deletion section, 570: tag information overwriting section

## Claims

1. An information processing device (110) that is configured to perform processing according to a set value represented by device setting information, comprising:
a near field communication unit (115), including:
a tag memory (116) configured to store set value information representing an update set value for updating the device setting information and configured to receive writing of the set value information even when power of the information processing device (110) is off;
the information processing device (110) further comprising:
an initialization processing section (130) configured to determine whether the set value information is stored in the tag memory (116) or not when the power of the information processing device (110) is turned on,
a detection section (139) configured to detect a status of the information processing device (110) when the initialization processing section (130) determines that the set value information is stored in the tag memory (116); and
an information setting section (140) configured to incorporate the set value information into the device setting information, wherein
the information setting section (140) is configured not to incorporate the set value information into the device setting information when the status of the information processing device (110) is a predetermined status,
**characterized in that**
the predetermined status is a used state, which indicates that after a time of factory shipment a user started using the information processing device (110).

2. The information processing device (110) according to claim 1, wherein the information processing device (110) is configured to shift to the used state when a predetermined set value included in the device setting information is changed.

3. The information processing device (110) according to claim 2, wherein the predetermined set value is an administrator password.

4. The information processing device (210) according to any one of claims 1 to 3, wherein
the tag memory (116) is configured to further store authentication information for performing authentication, and
the information setting section (240) is configured to incorporate the set value information into the device setting information when the status of the information processing device (210) is not the used status and the authentication by use of the authentication information succeeds.

5. An information processing method executed by an information processing device (110) that comprises a near field communication unit (115) and performs processing according to a set value represented by device setting information stored in the information processing device (110), comprising:
determining, by an initialization processing section (130), whether or not set value information representing an update set value for updating the device setting information is stored in a tag memory (116) of the information processing device (110), when the power of the information processing device (110) is turned on;
detecting, by a detection section (139), a status of the information processing device (110) when the initialization processing section (130) determines that the set value information is stored in the tag memory (116); and
not incorporating the set value information into the device setting information when the status of the information processing device (110) is a predetermined status,
**characterized in that**
the predetermined status is a used state, which indicates that after a time of factory shipment a user started using the information processing device (110).

## Patentansprüche

1. Informationsverarbeitungsvorrichtung (110), die dazu konfiguriert ist, eine Verarbeitung gemäß einem durch Vorrichtungseinstellungsinformationen repräsentierten Einstellungswert durchzuführen, umfassend:
eine Nahfeldkommunikationseinheit (115), enthaltend:
einen Markierungsspeicher (116), der dazu konfiguriert ist, Informationen über einen Einstellungswert zu speichern, die einen Aktualisierungseinstellungswert zum Aktualisieren der Vorrichtungseinstellungsinformationen repräsentieren, und der dazu konfiguriert ist, ein Schreiben der Informationen über den Einstellungswert zu empfangen, selbst wenn eine Stromversorgung der Informationsverarbeitungsvorrichtung (110) ausgeschaltet ist;
wobei die Informationsverarbeitungsvorrichtung (110) ferner umfasst:
einen Initialisierungsverarbeitungsabschnitt (130), der dazu konfiguriert ist, zu bestimmen, ob die Informationen über den Einstellungswert in dem Markierungsspeicher (116) gespeichert sind oder nicht, wenn die Stromversorgung der Informationsverarbeitungsvorrichtung (110) eingeschaltet ist, und
einen Detektionsabschnitt (139), der dazu konfiguriert ist, einen Status der Informationsverarbeitungsvorrichtung (110) zu detektieren, wenn der Initialisierungsverarbeitungsabschnitt (130) bestimmt, dass die Informationen über den Einstellungswert in dem Markierungsspeicher (116) gespeichert sind; und
einen Informationseinstellungsabschnitt (140), der dazu konfiguriert ist, die Informationen über den Einstellungswert in die Vorrichtungseinstellungsinformationen einzubeziehen, wobei
der Informationseinstellungsabschnitt (140) dazu konfiguriert ist, die Informationen über den Einstellungswert nicht in die Vorrichtungseinstellungsinformationen einzubeziehen, wenn der Status der Informationsverarbeitungsvorrichtung (110) ein vorbestimmter Status ist,
**dadurch gekennzeichnet, dass**
der vorbestimmte Status ein verwendeter Status ist, der anzeigt, dass ein Benutzer nach einer Zeit der Werksauslieferung begonnen hat, die Informationsverarbeitungsvorrichtung (110) zu verwenden.

2. Informationsverarbeitungsvorrichtung (110) nach Anspruch 1, wobei die Informationsverarbeitungsvorrichtung (110) dazu konfiguriert ist, in den verwendeten Zustand zu wechseln, wenn ein vorbestimmter Einstellungswert, der in den Vorrichtungseinstellungsinformationen enthalten ist, geändert wird.

3. Informationsverarbeitungsvorrichtung (110) nach Anspruch 2, wobei der vorbestimmte Einstellungswert ein Administrator-Passwort ist.

4. Informationsverarbeitungsvorrichtung (210) nach einem der Ansprüche 1 bis 3, wobei
der Markierungsspeicher (116) dazu konfiguriert ist, ferner Authentifizierungsinformationen zum Durchführen einer Authentifizierung zu speichern, und
der Informationseinstellungsabschnitt (240) dazu konfiguriert ist, die Informationen über den Einstellungswert in die Vorrichtungseinstellungsinformationen einzubinden, wenn der Status der Informationsverarbeitungsvorrichtung (210) nicht der verwendete Status ist und die Authentifizierung unter Verwendung der Authentifizierungsinformationen erfolgreich ist.

5. Informationsverarbeitungsverfahren, das von einer Informationsverarbeitungsvorrichtung (110) ausgeführt wird, die eine Nahfeldkommunikationseinheit (115) umfasst und eine Verarbeitung gemäß einem Einstellungswert durchführt, der durch in der Informationsverarbeitungsvorrichtung (110) gespeicherte Vorrichtungseinstellungsinformationen repräsentiert wird, umfassend:
Bestimmen, durch einen Initialisierungsverarbeitungsabschnitt (130), ob Informationen über einen Einstellungswert, die einen Aktualisierungseinstellungswert zum Aktualisieren der Vorrichtungseinstellungsinformationen repräsentieren, in einem Markierungsspeicher (116) der Informationsverarbeitungsvorrichtung (110) gespeichert sind oder nicht, wenn die Stromversorgung der Informationsverarbeitungsvorrichtung (110) eingeschaltet wird;
Detektieren, durch einen Detektionsabschnitt (139), eines Status der Informationsverarbeitungsvorrichtung (110), wenn der Initialisierungsverarbeitungsabschnitt (130) bestimmt, dass die Informationen über den Einstellungswert in dem Markierungsspeicher (116) gespeichert sind; und
Nicht-Einbeziehen der Informationen über den Einstellungswert in die Vorrichtungseinstellungsinformationen, wenn der Status der Informationsverarbeitungsvorrichtung (110) ein vorbestimmter Status ist,
**dadurch gekennzeichnet, dass**
der vorbestimmte Status ein verwendeter Status ist, der anzeigt, dass ein Benutzer nach einer Zeit der Werksauslieferung begonnen hat, die Informationsverarbeitungsvorrichtung (110) zu verwenden.

## Revendications

1. Un dispositif (110) de traitement d'informations qui est configuré pour effectuer un traitement selon une valeur définie représentée par des informations de paramétrage de dispositif, comprenant :
une unité (115) de communication en champ proche, comprenant :
une mémoire d'étiquette (116) configurée pour stocker des informations de valeur définie représentant une valeur définie de mise à jour pour mettre à jour les informations de réglage du dispositif et configurée pour recevoir l'écriture des informations de valeur définie même lorsque l'alimentation du dispositif (110) de traitement d'informations est coupée ;
le dispositif (110) de traitement d'informations comprenant en outre :
une section (130) de traitement d'initialisation configurée pour déterminer si les informations de valeur définie sont stockées ou non dans la mémoire d'étiquette (116) lorsque l'alimentation du dispositif (110) de traitement d'informations est activée,
une section de détection (139) configurée pour détecter un état du dispositif (110) de traitement d'informations lorsque la section (130) de traitement d'initialisation détermine que les informations de valeur définie sont stockées dans la mémoire d'étiquette (116) ; et
une section (140) de paramétrage d'informations configurée pour incorporer les informations de valeur définie dans les informations de paramétrage de dispositif,
la section (140) de paramétrage d'informations étant configurée pour ne pas incorporer les informations de valeur définie dans les informations de paramétrage de dispositif lorsque l'état du dispositif (110) de traitement d'informations est un état prédéterminé,
**caractérisé en ce que**
l'état prédéterminé est un état utilisé, qui indique qu'après un certain temps d'expédition en usine, un utilisateur a commencé à utiliser le dispositif (110) de traitement d'informations.

2. Le dispositif (110) de traitement d'informations selon la revendication 1, dans lequel le dispositif (110) de traitement d'informations est configuré pour passer à l'état utilisé lorsqu'une valeur définie prédéterminée incluse dans les informations de réglage du dispositif est modifiée.

3. Le dispositif (110) de traitement d'informations selon la revendication 2, dans lequel la valeur définie prédéterminée est un mot de passe administrateur.

4. Le dispositif de traitement d'informations (210) selon l'une quelconque des revendications 1 à 3, dans lequel
la mémoire d'étiquette (116) est configurée pour stocker en outre des informations d'authentification pour effectuer une authentification, et
la section de paramétrage d'informations (240) est configurée pour incorporer les informations de valeur définie dans les informations de paramétrage de dispositif lorsque l'état du dispositif de traitement d'informations (210) n'est pas l'état utilisé et que l'authentification par utilisation des informations d'authentification réussit.

5. Un procédé de traitement d'informations mis en oeuvre par un dispositif (110) de traitement d'informations qui comprend une unité (115) de communication en champ proche et effectue un traitement selon une valeur définie représentée par des informations de paramétrage de dispositif stockées dans le dispositif (110) de traitement d'informations, comprenant :
le fait, par une section (130) de traitement d'initialisation, de déterminer si des informations de valeur définie représentant une valeur définie de mise à jour pour mettre à jour les informations de réglage du dispositif sont stockées ou non dans une mémoire d'étiquette (116) du dispositif (110) de traitement d'informations, lorsque l'alimentation du dispositif (110) de traitement d'informations est activée ;
le fait, par une section de détection (139), de détecter un état du dispositif (110) de traitement d'informations lorsque la section (130) de traitement d'initialisation détermine que les informations de valeur définie sont stockées dans la mémoire d'étiquette (116) ; et
le fait de ne pas incorporer les informations de valeur définie dans les informations de paramétrage du dispositif lorsque l'état du dispositif (110) de traitement d'informations est un état prédéterminé,
**caractérisé en ce que**
l'état prédéterminé est un état utilisé, qui indique qu'après un certain temps d'expédition en usine, un utilisateur a commencé à utiliser le dispositif (110) de traitement d'informations.
